(19) Europäisches Patentamt
European Patent Office
Office européen des brevets

(11) **EP 2 139 136 A1**

(12) **EUROPEAN PATENT APPLICATION**
published in accordance with Art. 153(4) EPC

(43) Date of publication:
**30.12.2009 Bulletin 2009/53**

(51) Int Cl.:
*H04J 11/00* (2006.01)   *H04Q 7/38* (0000.00)

(21) Application number: **08739801.2**

(22) Date of filing: **03.04.2008**

(86) International application number:
**PCT/JP2008/056694**

(87) International publication number:
**WO 2008/126764 (23.10.2008 Gazette 2008/43)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **05.04.2007 JP 2007099078**

(71) Applicant: **Sharp Kabushiki Kaisha**
**Osaka-shi, Osaka 545-8522 (JP)**

(72) Inventors:
• **HAMAGUCHI, Yasuhiro**
**Osaka-shi,Osaka 545-8522 (JP)**
• **NAMBA, Hideo**
**Osaka-shi, Osaka 545-8522 (JP)**
• **TO, Shimpei**
**Osaka-shi, Osaka 545-8522 (JP)**

(74) Representative: **Müller - Hoffmann & Partner Patentanwälte**
**Innere Wiener Strasse 17**
**81667 München (DE)**

(54) **COMMUNICATION METHOD DECISION DEVICE, TRANSMISSION DEVICE, RECEPTION DEVICE, OFDM ADAPTIVE MODULATION SYSTEM, AND COMMUNICATION METHOD DECISION METHOD**

(57)   Modulation information is efficiently notified to a communicating destination. Provided are a first modulation information determining section 1 that determines first modulation information for each subcarrier or each subcarrier group with grouped subcarriers based on the propagation path information and bitmap information determined from modulation information, a data transform section 2 that transforms the first modulation information into a different data space, a second modulation information determining section 3 that compresses the transformed data to determine second modulation information to be notified to a communicating destination, an inverse data transform section 4 that inversely transforms the second modulation information into an original data space, and a third modulation information determining section 5 that determines third modulation information for each subcarrier or each subcarrier group with grouped subcarriers based on the inversely-transformed data and the bitmap information.

*FIG.1*

**Description**

Technical Field

The present invention relates to a communication scheme determining apparatus, transmission apparatus, reception apparatus, OFDM adaptive modulation system and communication scheme determining method applied to the OFDM adaptive modulation system for determining modulation information adaptively for each subcarrier, or for each subcarrier group with grouped subcarriers based on propagation path information, and notifying a communicating destination of the determined modulation information.

Background Art

With increases in data communication amount in recent years, the need has been enhanced for mobile communication systems with higher spectral efficiency, and various techniques have been proposed with the aim of achieving the system. One of techniques with the possibility of enhancing spectral efficiency is an OFDM (Orthogonal Frequency Division Multiplex: hereinafter, referred to as "OFDM adaptive modulation") technique using subcarrier adaptive modulation, and various researches have been made on the technique (Non-patent Document 1).

In this OFDM adaptive modulation system, a target packet error rate (PER) and/or bit error rate (BER) is set, and a modulation scheme and coding rate (which are collectively referred to as ML (Modulation Level)) of each subcarrier of an OFDM signal, etc. are determined from propagation path conditions with a communicating destination or the like.

In the OFDM adaptive modulation system, in performing communication, it is necessary to notify a communicating destination terminal of ML of each subcarrier (hereinafter, the information about the ML is referred to as MLI (ML Information)), and notifying the MLI efficiently is important to enhance the communication efficiency. In this description, as a compression rate of the MLI, the following equation is defined:

$$\text{(Compression rate)} = \text{(MLI data amount subsequent to compression)} / \text{(MLI data amount prior to compression)}$$

In other words, as the compression rate is made lower in number, the data amount to reduce increases, and the communication efficiency improves. Further, a difference in MLI defined on each subcarrier between before and after compression is described as an error or error component.

The importance to compress the MLI is also described in Non-patent Document 1. In Non-patent Document 1, it is proposed to group subcarriers, assign the same ML to the same group, and reduce the MIL. In this case, assuming that the MIL required per subcarrier is m bits (m is any integer of "1" or more), the total number of subcarriers is N (N is any integer of "2" or more), and that the number of subcarriers in a group is G (G is any integer of "2" or more), the compression rate is:

$$1/G \ \dots \ (1)$$

Further, considered as another simple information compression method is a method of notifying of a difference in MLI between adjacent subcarriers as information. In the case of using this difference method, MLI (m bits) that is not compressed is used as reference MLI for some subcarriers, and for the other subcarriers, n bits (integer of n<m) are used for the difference from the reference MLI as difference information. Naturally, it is possible to suppress the compression rate as the number of reference subcarriers decreases, however, since there is a possibility that propagation of error continues when an error occurs, it is necessary to use reference MLI at some intervals. Assuming that the number of subcarriers to notify of the difference information is X (any integer of X<N), the compression rate of the difference method is:

$$\{nxX + (N-X)xm\} / (mxN) \ \dots \ (2)$$

Non-patent Document 1: IEICE, Technical Report, RCS2003-279, "A study on Block Controlled Multilevel Transmit Power Control Scheme using Carrier hole Control Technique for OFDM based Adaptive Modulation System"

Disclosure of Invention

Problems to be Solved by the Invention

As described above, it is obvious that the performance degrades as a frequency variation increases even a little in compression by grouping. This defect is pointed out also in Non-Patent Document 1, and as a solution to the defect, it is proposed to re-allocate subcarrier power, or not to assign data to subcarriers (that are made carrier holes) with large deterioration among grouped subcarriers.

With respect to re-allocation of power, it is necessary to perform similar power allocation on a propagation path estimation symbol to be a reference in demodulation according to the allocation, or transmit the powerinformation. When the similar allocation is performed on a propagation path estimation symbol, the propagation path estimation symbol is effective for data in which power allocation was performed. However, when there is data such as shared data or the like on which a plurality of different terminals performs demodulation, the power allocation leads to deterioration in characteristics. Further, transmitting the power information causes again the problem that the control information increases.

Meanwhile, the throughput obviously deteriorates in adopting the method of not assigning data to subcarriers with large deterioration among grouped subcarriers. Further, a reduction in information amount by grouping functions effectively in environments with little variation in propagation path in grouped subcarriers. However, since such a compression method is dependent on propagation path characteristics, it is difficult to further decrease the compression rate, and it is also difficult to adaptively control the compression rate.

Further, the difference method functions effectively when data is not compressed so much, but has the problem that deterioration occurs abruptly when the compression rate is made low in number. In the case of the difference method, as can be seen from Equation (2), when compression is performed most mathematically effectively, the compression rate is 2/m. This is the case that a reference subcarrier is a beforehand known value in n=1. However, in the case of n=1, the difference information cannot be represented only in two ways (1, -1), and the error remarkably increases. Accordingly, 2/m is the case that the compression rate is actually made the lowest, and is not efficient so much.

The present invention was made in view of such circumstances, and it is an obj ect of the invention to provide a communication scheme determining apparatus, transmission apparatus, reception apparatus, OFDM adaptive modulation system and communication scheme determining method to enable modulation information to be effectively notified to a communicating destination.

Means for Solving the Problem

(1) To attain the above-mentioned object, the present invention takes following measures. In other words, a communication scheme determining apparatus of the invention is a communication scheme determining apparatus applied to an OFDM adaptive modulation system for adaptively determining modulation information for each subcarrier or each subcarrier group with grouped subcarriers based on first propagation path information, and notifying a communicating destination of the determined modulation information, and is characterized by having a first modulation information determining section that determines first modulation information for each subcarrier or each subcarrier group with grouped subcarriers, based on the first propagation path information and bitmap information determined from modulation information, a data transform section that transforms the first modulation information into a different data space, a second modulation information determining section that compresses the transformed data to determine second modulation information to be notified to a communicating destination, an inverse data transform section that inversely transforms the second modulation information into an original data space, and a third modulation information determining section that determines third modulation information for each subcarrier or each subcarrier group with grouped subcarriers, based on the inversely-transformed data and the bitmap information.

Thus, the first modulation information undergoes data transform, the transformed data is compressed to determine the second modulation information, the second modulation information is notified to a communicating destination, and it is thereby possible to enhance the communication efficiency. Further, the second modulation information undergoes inverse data transform, the third modulation information is determined based on the inversely-transformed data and bitmap information, and the communicating destination is thereby able to reliably obtain the third modulation information from the second modulation information.

(2) Further, a communication scheme determining apparatus of the invention is a communication scheme determining apparatus applied to an OFDM adaptive modulation system for adaptively determining modulation information for each subcarrier or each subcarrier group with grouped subcarriers based on first propagation path information, and notifying a communicating destination of the determined modulation information, and is characterized by having a first modulation information determining section that determines first modulation information for each subcarrier or each subcarrier group with grouped subcarriers, based on the first propagation path information and bitmap information determined from modulation information, a data transform section that transforms the first modulation information into a different data space, a second modulation information determining section that performs compression corresponding to second propagation path information on the transformed data to determine second modulation information to be notified to a communicating destination, an inverse data transform section that inversely transforms the second modulation information into an original data space, and a third modulation information determining section that determines third modulation information for each subcarrier or each subcarrier group with grouped subcarriers, based on the inversely-transformed data and the bitmap information.

Thus, the compression corresponding to the second propagation path information is performed, and it is thereby possible to efficiently perform compression. As a result, the communication efficiency can be further improved. Moreover, the second modulation information undergoes inverse data transform, the third modulation information is determined based on the inversely-transformed data and bitmap information, and the communicating destination is thereby able to reliably obtain the third modulation information from the second modulation information.

(3) Further, in the communication scheme determining apparatus of the invention, it is a feature that the second propagation path information is delay dispersion of a propagation path, and that the second modulation information determining section performs compression corresponding to the delay dispersion.

Thus, the compression is performed in response to delay dispersion of the propagation path, and it is thereby possible to vary the compression rate corresponding to conditions of the propagation path, and to enhance the communication efficiency.

(4) Further, a communication scheme determining apparatus of the invention is a communication scheme determining apparatus applied to an OFDM adaptive modulation system for adaptively determining modulation information for each subcarrier or each subcarrier group with grouped subcarriers based on first propagation path information, and notifying a communicating destination of the determined modulation information, and is characterized by having a first modulation information determining section that determines first modulation information for each subcarrier or each subcarrier group with grouped subcarriers, based on the first propagation path information and bitmap information determined from modulation information, a data transform section that transforms the first modulation information into a different data space, a second modulation information determining section that compresses the transformed data to determine second modulation information to be notified to a communicating destination, an inverse data transform section that inversely transforms the second modulation information into an original data space, a third modulation information determining section that determines third modulation information for each subcarrier or each subcarrier group with grouped subcarriers, based on the inversely-transformed data and the bitmap information, and a control section that detects a difference between the first modulation information and the third modulation information, where the second modulation information determining section compresses the transformed data so that the difference between the first modulation information and the third modulation information input from the control section is a predetermined threshold or less.

Thus, a difference between the first modulation information and the thirdmodulation information is detected, data is compressed so that the difference is a predetermined threshold or less, and it is thereby possible to decrease errors in compression. By this means, it is possible to enhance the communication efficiency, and reliably perform demodulation of the second modulation information in the communicating destination.

(5) Further, a communication scheme determining apparatus of the invention is a communication scheme determining apparatus applied to an OFDM adaptive modulation system for adaptively determining modulation information for each subcarrier or each subcarrier group with grouped subcarriers based on first propagation path information, and notifying a communicating destination of the determined modulation information, and is characterized by having a first modulation information determining section that determines first modulation information for each subcarrier or each subcarrier group with grouped subcarriers, based on the first propagation path information and bitmap information determined from modulation information, a data transform section that transforms the first modulation information into a different data space, a second modulation information determining section that compresses the transformed data to determine second modulation information to be notified to a communicating destination, an inverse data transform section that inversely transforms the second modulation information into an original data space, a third modulation information determining section that determines third modulation information for each subcarrier or each subcarrier group with grouped subcarriers, based on the inversely-transformed data and the bitmap information, and a control section that detects a difference between the first modulation information and the third modulation information, where the second modulation information determining section selects a compression method that minimizes the difference between the first modulation information and the third modulation information input from the control section from among a plurality of kinds of compression methods, and compresses the transformed data by the selected compression method.

Thus, a compression method that minimizes the difference between the first modulation information and the third modulation information input from the control section is selected from among a plurality of kinds of compression methods, the data is compressed by the selected compression method, and it is thereby possible to minimize errors, while enhancing the compression efficiency. By this means, it is possible to improve the communication efficiency.

(6) Further, in the communication scheme determining apparatus of the invention, it is a feature that the bitmap information is represented by the number of information bits indicating at least one of a modulation scheme and a coding rate, and that the modulation information is mapped sequentially corresponding to the number of information bits.

By such bitmap information, the modulation scheme, coding rate and amplitude information can be specified in determining the first and third modulation information, and it is thereby possible to increase the processing speed.

(7) Further, a communication scheme determining apparatus of the invention is a communication scheme determining apparatus applied to an OFDM adaptive modulation system for notifying a communicating destination of CQI information indicative of reception quality for each subcarrier or eachsubcarrier group with grouped subcarriers, and is characterized by having a data transform section that transforms first CQI information into a different data space, and a second CQI information determining section that performs compression corresponding to second propagation path information on the transformed data to determine second CQI information to be notified to a communicating destination.

Thus, the first CQI information undergoes data transform, the transformed data is compressed to determine the second CQI information, the second CQI information is notified to a communicating destination, and it is thereby possible to enhance the communication efficiency.

(8) Further, in the communication scheme determining apparatus of the invention, it is a feature that the second propagation path information is delay dispersion of a propagation path, and that the second CQI information determining section performs compression corresponding to the delay dispersion.

Thus, the compression is performed in response to delay dispersion of the propagation path, and it is thereby possible to vary the compression rate corresponding to conditions of the propagation path, and to enhance the communication efficiency.

(9) Further, a communication scheme determining apparatus of the invention is a communication scheme determining apparatus applied to an OFDM adaptive modulation system for notifying a communicating destination of CQI information indicative of reception quality for each subcarrier or each subcarrier group with grouped subcarriers, and is characterized by having a data transform section that transforms first CQI information into a different data space, a second CQI information determining section that compresses the transformed data to determine second CQI information to be notified to a communicating destination, an inverse data transform section that inversely transforms the second CQI information into an original data space, a third CQI information determining section that determines third CQI information for each subcarrier or each subcarrier group with grouped subcarriers based on the inversely-transformed data, and a control section that detects a difference between the first CQI information and the third CQI information, where the second CQI information determining section compresses the transformed data so that the difference between the first CQI information and the third CQI information input from the control section is a predetermined threshold or less.

Thus, a difference between the first CQI information and the third CQI information is detected, data is compressed so that the difference is a predetermined threshold or less, and it is thereby possible to decrease errors in compression. By this means, it is possible to enhance the communication efficiency, and reliably perform demodulation of the second CQI information in the communicating destination.

(10) Further, a communication scheme determining apparatus of the invention is a communication scheme determining apparatus applied to an OFDM adaptive modulation system for notifying a communicating destination of CQI information indicative of reception quality for each subcarrier or each subcarrier group with grouped subcarriers, and is characterized by having a data transform section that transforms first CQI information into a different data space, a second CQI information determining section that compresses the transformed data to determine second CQI information to be notified to a communicating destination, an inverse data transform section that inversely transforms the second CQI information into an original data space, a third CQI information determining section that determines third CQI information for each subcarrier or each subcarrier group with grouped subcarriers based on the inversely-transformed data, and a control section that detects a difference between the first CQI information and the third CQI information, where the second CQI information determining section selects a compression method that minimizes the difference between the first CQI information and the third CQI information input from the control section from among a plurality of kinds of compression methods, and compresses the transformed data by the selected compression method.

Thus, a compression method that minimizes the difference between the first CQI information and the third CQI information input from the control section is selected from among a plurality of kinds of compression methods, the transformed data is compressed by the selected compression method, and it is thereby possible to minimize errors, while enhancing the compression efficiency. By this means, it is possible to improve the communication efficiency.

(11) Further, in the communication scheme determining apparatus of the invention, it is a feature that the data transform is discrete cosine transform, and that the inverse data transform is inverse discrete cosine transform.

According to this constitution, it is possible to perform transform and inverse transform processing easily, promptly and properly.

(12) Further, in the communication scheme determining apparatus of the invention, it is a feature that the compression is to allocate different information amounts for each output sample or sample group of discrete cosine transform.

Thus, different information amounts are allocated for each output sample or sample group of discrete cosine transform, and it is thereby possible to minimize errors with the control information made constant. By this means, for example, in systems which are easier in processing when the control information is constant, by keeping the compression rate constant and varying quantization bits for each sample subjected to DCT, it is possible to reduce errors.

(13) Further, in the communication scheme determining apparatus of the invention, the compression is performed by reducing information amounts corresponding to frequencies more than or equal to a predetermined frequency for an output signal subjected to the discrete cosine transform.

Thus, information amounts corresponding to frequencies more than or equal to a predetermined frequency are reduced for an output signal subjected to the discrete cosine transform, and it is thereby possible to lower the compression rate and enhance the communication efficiency.

(14) Further, in the communication scheme determining apparatus of the invention, the compression is performed by setting information amounts corresponding to frequencies more than or equal to a predetermined frequency at zero for an output signal subjected to the discrete cosine transform.

Thus, information amounts corresponding to frequencies more than or equal to a predetermined frequency are set at zero for an output signal subjected to the discrete cosine transform, and it is thereby possible to lower the compression rate and enhance the communication efficiency.

(15) Further, in the communication scheme determining apparatus of the invention, it is a feature that the data transform section performs discrete cosine transform on the first modulation information, and that the second modulation information determining section selects a compression method that minimizes the difference between the first modulation information and the third modulation information input from the control section based on a table for allocating different information amounts corresponding to compression methods, for a plurality of sample groups obtained by grouping a plurality of samples obtained by performing the discrete cosine transform, and compresses the transformed data by the selected compression method.

Thus, a compression method that minimizes the difference between the first modulation information and the third modulation information input from the control section is selected from among a plurality of kinds of compression methods, the data is compressed by the selected compression method, and it is thereby possible to minimize errors, while enhancing the compression efficiency. By this means, it is possible to improve the communication efficiency. Further, since different information amounts are allocated for each sample to assign the second modulation information, it is possible to minimize errors with the control information made constant.

(16) Further, in the communication scheme determining apparatus of the invention, it is a feature that the data transform section performs discrete cosine transform on the first CQI information, and that the second CQI information determining section selects a compression method that minimizes the difference between the first CQI information and the third CQI information input from the control section based on a table for allocating different information amounts corresponding to compression methods, for a plurality of sample groups obtained by grouping a plurality of samples obtained by performing the discrete cosine transform, and compresses the transformed data by the selected compression method.

Thus, a compression method that minimizes the difference between the first CQI information and the third CQI information input from the control section is selected from among a plurality of kinds of compression methods, the data is compressed by the selected compression method, and it is thereby possible to minimize errors, while enhancing the compression efficiency. By this means, it is possible to improve the communication efficiency. Further, since different information amounts are allocated for each sample to assign the second CQI information, it is possible to minimize errors with the control information made constant.

(17) Further, a transmission apparatus of the invention is a transmission apparatus applied to an OFDM adaptive modulation system for adaptively determining modulation information for each subcarrier or each subcarrier group with grouped subcarriers based on first propagation path information, and notifying a communicating destination of the determined modulation information, and is characterized by having the communication scheme determining section as described in claim 1, a subcarrier adaptive modulation section that modulates subcarriers based on the third modulation information output from the communication scheme determining apparatus, and a transmission section that transmits the second modulation information output from the communication scheme determining apparatus to a communicating destination.

According to the invention, since the first modulation information undergoes data transform, the transformed data is compressed to determine the second modulation information, and the second modulation information is notified to a communicating destination, it is possible to enhance the communication efficiency.

(18) Further, a transmission apparatus of the invention is a transmission apparatus applied to an OFDM adaptive modulation system for adaptively determining modulation information for each subcarrier or each subcarrier group with grouped subcarriers based on first propagation path information, and notifying a communicating destination of the determined modulation information, and is characterized by having the communication scheme determining apparatus as described in any one of claims 2 to 6, a subcarrier adaptive modulation section that modulates subcarriers based on the third modulation information output from the communication scheme determining apparatus, and a transmission section that transmits the second modulation information output from the communication scheme determining apparatus and compression information to generate the second modulation information to a communicating destination.

According to the invention, since the compression corresponding to the second propagation path information is performed, it is possible to efficiently perform compression. As a result, the communication efficiency can be further improved.

(19) Further, a transmission apparatus of the invention is a transmission apparatus applied to an OFDM adaptive modulation system for notifying a communicating destination of CQI information indicative of reception quality, and is characterized by having the communication scheme determining apparatus according to any one of claims 8 to 12, and a transmission section that transmits the second CQI information output from the communication scheme determining apparatus and compression information to generate the second CQI information to a communicating destination.

According to the invention, since the compression corresponding to the second propagation path information is performed, it is possible to efficiently perform compression. As a result, the communication efficiency can be further improved.

(20) Further, a reception apparatus of the invention is a reception apparatus for receiving an OFDM signal transmitted from the transmission apparatus as described in claim 19 to demodulate data, and is characterized by having an inverse transform section that has the same function as the function of the inverse data transform section to inversely transform the received second modulation information into an original data space.

According to the invention, the reception apparatus has the same function as that of the inverse data transform section, inversely transforms the received second modulation information into an original data space, and is thereby able to obtain the thirdmodulation information based on the second modulation information.

(21) Further, a reception apparatus of the invention is a reception apparatus for receiving an OFDM signal transmitted from the transmission apparatus as described in claim 20 to demodulate data, and is characterized by having an inverse transform section that has the same function as the function of the inverse data transform section to inversely transform the received second modulation information into an original data space from compression information to generate the second modulation information.

According to the invention, the reception apparatus has the same function as that of the inverse data transform section, inversely transforms the received second modulation information and the compression information to generate the second modulation information into an original data space, and is thereby able to obtain the thirdmodulation information based on the second modulation information.

(22) Further, a reception apparatus of the invention is a reception apparatus for receiving an OFDM signal transmitted from the transmission apparatus as described in claim 21 to demodulate data, and is characterized by having an inverse transform section that has the same function as the function of the inverse data transform section to inversely transform the received second CQI information into an original data space from compression information to generate the second CQI information.

According to the invention, the reception apparatus has the same function as that of the inverse data transform section, inversely transforms the received second CQI information and the compression information to generate the second CQI information into an original data space, and is thereby able to obtain the second CQI information.

(23) Further, a communication scheme determining method of the invention is a communication scheme determining method applied to an OFDM adaptive modulation system for adaptively determining modulation information for each subcarrier or each subcarrier group with grouped subcarriers based on first propagation path information, and notifying a communicating destination of the determined modulation information, and is characterized by including at least a step of determining first modulation information for each sub carrier or each subcarrier group with grouped subcarriers, based on the first propagation path information and bitmap information determined from modulation information, a step of transforming the first modulation information into a different data space, a step of compressing the transformed data to determine second modulation information to be notified to a communicating destination, a step of inversely transforming the second modulation information into an original data space, and a step of determining third modulation information for each subcarrier or each subcarrier group with grouped subcarriers, based on the inversely-transformed data and the bitmap information.

Thus, the first modulation information undergoes data transform, the transformed data is compressed to determine the second modulation information, the second modulation information is notified to a communicating destination, and it is thereby possible to enhance the communication efficiency. Further, the second modulation information undergoes inverse data transform, the third modulation information is determined based on the inversely-transformed data and bitmap information, and the communicating destination is thereby able to reliably obtain the third modulation information from the second modulation information.

(24) Further, a communication scheme determining method of the invention is a communication scheme determining method applied to an OFDM adaptive modulation system for notifying a communicating destination of CQI information indicative of reception quality for each subcarrier or each subcarrier group with grouped subcarriers, and is characterized by including at least a step of transforming first CQI information into a different data space, a step of compressing the transformed data to determine second CQI information to be notified to a communicating destination, a step of inversely transforming the second CQI information into an original data space, a step of determining third CQI information for each subcarrier or each subcarrier group with grouped subcarriers based on the inversely-transformed data, and a step of detecting a difference between the first CQI information and the third CQI information, where in the step of determining the second CQI information, the transformed data is compressed so that the difference between the first CQI information and the third CQI information is a predetermined threshold or less.

Thus, a difference between the first CQI information and the third CQI information is detected, data is compressed so that the difference is a predetermined threshold or less, and it is thereby possible to decrease errors in compression. By this means, it is possible to enhance the communication efficiency, and reliably perform demodulation of the second CQI information in the communicating destination.

(25) Further, a communication scheme determining method of the invention is a communication scheme determining method applied to an OFDM adaptive modulation system for notifying a communicating destination of CQI information indicative of reception quality for each subcarrier or each subcarrier group with grouped subcarriers, and is characterized by including at least a step of transforming first CQI information into a different data space, a step of compressing the transformed data to determine second CQI information to be notified to a communicating destination, a step of inversely transforming the second CQI information into an original data space, a step of determining third CQI information for each subcarrier or each subcarrier group with grouped subcarriers based on the inversely-transformed data, and a step of detecting a difference between the first CQI information and the third CQI information, where in the step of determining the second CQI information, a compression method that minimizes the difference between the first CQI information and the third CQI information is selected from among a plurality of kinds of compression methods, and the transformed data is compressed by the selected compression method.

Thus, a compression method that minimizes the difference between the first CQI information and the third CQI information input from the control section is selected from among a plurality of kinds of compression methods, the transformed data is compressed by the selected compression method, and it is thereby possible to minimize errors, while enhancing the compression efficiency. By this means, it is possible to improve the communication efficiency.

Further, the communication scheme determining apparatus of the invention is **characterized in that** the second propagation path information or the difference between the first modulation information and the third modulation information is associated with a compression rate, and that the compression is performed with the compression rate associated with the second propagation path information or the difference between the first modulation information and the third modulation information.

According to this constitution, corresponding to the second propagation path information or the difference between the first modulation information and the third modulation information, it is possible to vary the compression rate to perform compression.

Further, the communication scheme determining apparatus of the invention is **characterized in that** the second propagation path information or the difference between the first CQI information and the third CQI information is associated with a compression rate, and that the compression is performed with the compression rate associated with the second propagation path information or the difference between the first CQI information and the third CQI information.

According to this constitution, corresponding to the second propagation path information or the difference between the first CQI information and the third CQI information, it is possible to vary the compression rate to perform compression.

Further, an OFDM adaptive modulation system of the invention is characterized by being comprised of the transmission apparatus as described in claim 19 and the reception apparatus as described in claim 22, the transmission apparatus as described in claim 20 and the reception apparatus as described in claim 23, or the transmission apparatus as described in claim 21 and the reception apparatus as described in claim 24.

According to the invention, the first modulation information undergoes data transform, the transformed data is compressed to determine the second modulation information, the second modulation information is notified to a communicating destination, and it is thereby possible to enhance the communication efficiency. Further, the second modulation information undergoes inverse data transform, the third modulation information is determined based on the inversely-transformed data and bitmap information, and the communicating destination is thereby able to reliably obtain the third modulation information from the second modulation information.

Advantageous Effect of the Invention

According to the invention, the first modulation information undergoes data transform, the transformed data is compressed to determine the second modulation information, the second modulation information is notified to a communicating destination, and it is thereby possible to enhance the communication efficiency. Further, the second modulation information undergoes inverse data transform, the third modulation information is determined based on the inversely-transformed data and bitmap information to perform communications using adaptive modulation for each subcarrier or each subcarrier group, and the communicating destination is thereby able to reliably obtain the third modulation information from the second modulation information and to perform efficient communications.

Further, according to the invention, since the first modulation information undergoes data transform, the transformed data is compressed to determine the second modulation information, the second modulation information undergoes inverse data transform, and in determining the third modulation information based on the inversely-transformed data and bitmap information, the compression method is selected so that a difference between the first modulation information and third modulation information is a predetermined value or less, it is possible to efficiently notify modulation information with few errors caused by compression.

Furthermore, the aforementioned scheme is applied to CQI information notification, the first CQI information undergoes data transform, the transformed data is compressed to determine the second CQI information, the second CQI information undergoes inverse data transform, and in determining the third CQI information based on the inversely-transformed data, the compression method is selected so that a difference between the first CQI information and third CQI information is a predetermined value or less. It is thereby possible to efficiently notify CQI information with few errors caused by compression.

Brief Description of Drawings

FIG.1 is a block diagram illustrating a schematic configuration of a communication scheme determining apparatus according to Embodiment 1;

FIG.2 is a flowchart illustrating the operation of the communication scheme determining apparatus according to Embodiment 1;

FIG. 3 is a block diagram illustrating a schematic configuration of a transmission apparatus according to Embodiment 1;

FIG. 4 is a diagram showing an example of data format in transmitting data in the transmission apparatus as shown in FIG. 3;

FIG.5 is a flowchart illustrating the operation of the transmission apparatus according to Embodiment 1;

FIG. 6 is a graph showing a DCT method for delay dispersion and the average number of errors (difference between the first modulation information and second modulation information) in a difference method;

FIG.7 is a block diagram illustrating a schematic configuration of a communication scheme determining apparatus according to Embodiment 3;

FIG.8 is a block diagram illustrating a schematic configuration of a transmission apparatus provided with the communication scheme determining apparatus according to Embodiment 3;

FIG. 9 is a diagram showing an example of packet format used in the transmission apparatus as shown in FIG. 8;

FIG. 10 is a graph showing variations in the number of errors when delay dispersion is 1.25/64 and a compression rate is 1/2(DCT-1/2);

FIG. 11 is a block diagram illustrating a schematic configuration of a communication scheme determining apparatus used in Embodiment 4;

FIG. 12 is a flowchart illustrating the operation of the communication scheme determining apparatus according to Embodiment 4;

FIG.13 is a block diagram illustrating a schematic configuration of a transmission apparatus provided with the communication scheme determining apparatus according to Embodiment 4;

FIG. 14 is a graph showing the number of errors and the number of times the number of errors is obtained;

FIG. 15 is a flowchart illustrating the operation that the communication scheme determining apparatus performs according to control of a control section 41;

FIG. 16 is a graph showing the number of errors and the number of times the number of errors is obtained;

FIG.17 is a block diagram illustrating a schematic configuration of a reception apparatus according to Embodiment 6;

FIG. 18 is a block diagram illustrating an internal configuration of a modulation scheme calculating section 56;

FIG. 19 is a flowchart illustrating the operation that the reception apparatus calculates the third modulation information used in modulation of a data part in the transmission apparatus;

FIG. 20 is a flowchart illustrating the operation of the reception apparatus;

FIG. 21 is a block diagram illustrating a configuration of a CQI information determining apparatus as the communication scheme determining apparatus; and

FIG. 22 is a flowchart illustrating the operation of the CQI information determining apparatus according to Embodiment 7.

Description of Symbols

| | |
|---|---|
| 1 | First modulation information determining section |
| 2 | DCT section |
| 3 | Second modulation information determining section |
| 4 | IDCT section |
| 5 | Third modulation information determining section |
| 10 | Communication scheme determining apparatus |
| 11 | Communication scheme determining apparatus |
| 12 | Communication scheme determining apparatus |
| 21 | First selecting section |
| 22 | Modulation section |
| 23 | Second selecting section |
| 24 | IFFT section |
| 25 | GI inserting section |
| 26 | RF section |
| 33 | Second modulation information determining section |
| 34 | Second modulation information determining section |
| 41 | Control section |
| 51 | RF section |
| 52 | Synchronization section |
| 53 | FFT section |
| 54 | Distribution section |
| 55 | Propagation path estimation section |
| 56 | Modulation scheme calculating section |
| 57 | Demodulation section |
| 62 | Demodulation section |
| 63 | Data selecting section |
| 64 | IDCT section |
| 65 | Fourth modulation information determining section |
| 1002 | DCT section |
| 1003 | Second CQI information determining section |
| 1004 | IDCT section |
| 1005 | Second CQI information determining section |
| 1041 | Control section |

Best Mode for Carrying Out the Invention

(Embodiment 1)

This Embodiment describes a communication scheme determining apparatus for compressing MLI using data space transform processing, and a transmission apparatus of an OFDM adaptive modulation system using the determining apparatus. In this Embodiment, descriptions are given on the assumption that the communication scheme determining apparatus determines a modulation scheme and coding rate of each subcarrier in the OFDM adaptive modulation system, but the apparatus may further determine transmit power of each subcarrier. To simplify descriptions, in this Embodiment are considered:

(1) the total number of subcarriers of an OFDM signal is "64";
(2) four modulation schemes, BPSK, QPSK, 16QAM and 64QAM, as modulation information of each subcarrier;
(3) twelve combinations using four coding rates, 1/2, 2/3, 3/4 and 7/8; and
(4) total thirteen combinations including a subcarrier (null carrier) not used in data communication.

Further, it is assumed that a modulation scheme and coding rate are determined for each subcarrier, and that grouping is not performed herein. Moreover, in the following description, MLI information is subjected to data space transform processing to compress data, and the case of using DCT is shown as an example.

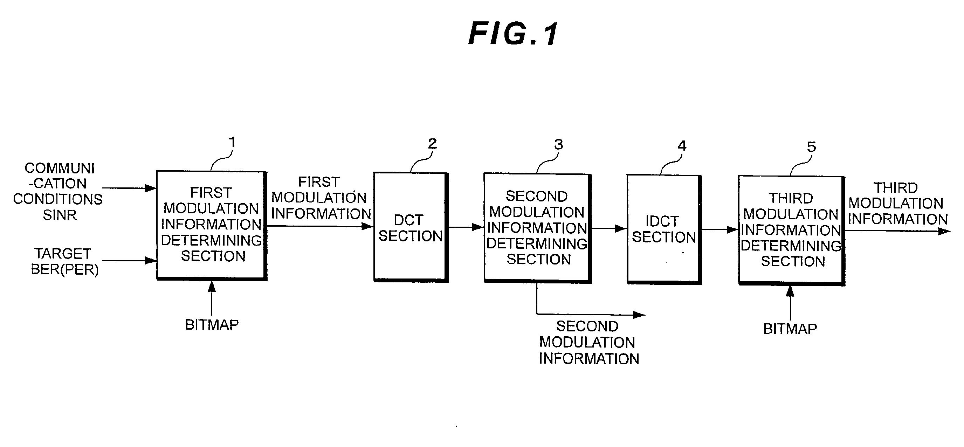

FIG.1 is a block diagram illustrating a schematic configuration of a communication scheme determining apparatus according to Embodiment 1. In FIG. 1, a first modulation information determining section 1 determines first modulation information of each subcarrier based on communication conditions such as, for example, propagation path conditions such as SINR (Signal to Interference and Noise Power Ratio) for each subcarrier and the like, moving speed of a terminal, target PER or BER, and bitmap (described later) of modulation information. A DCT section 2 performs DCT (Discrete Cosine Transform) on an output of the first modulation information determining section 1 using inputs corresponding to the number of subcarriers to compress.

A second modulation information determining section 3 performs information compression on an output of the DCT section 2 to determine second modulation information. The second modulation information determining section 3 has the function of determining the second modulation information, and concurrently supplementing and outputting data required to perform transform on data again, and this processing is referred to as "inverse compression". An IDCT section 4 performs IDCT (Inverse DCT) on inversely-compressed data output from the second modulation information determining section 3.

A third modulation information determining section 5 determines third modulation information from an output of the IDCT section 4 and the bitmap. The first modulation information determining section 1 inputs data to the DCT section 2 on a basis of a subcarrier to perform information compression, and in this embodiment, since an example of concurrently compressing modulation information of all the subcarriers, all the information is input to the DCT section.

[Table 1]

| Modulation Scheme | Coding rate | Bitmap | Amplitude Information |
|---|---|---|---|
| null | null | 1010 | -6 |
| BPSK | 1/2 | 1011 | -5 |
| BPSK | 2/3 | 1100 | -4 |
| BPSK | 3/4 | 1101 | -3 |
| QPSK | 1/2 | 1110 | -2 |
| QPSK | 2/3 | 1111 | -1 |
| QPSK | 3/4 | 0000 | 0 |
| 16QAM | 1/2 | 0001 | 1 |
| 16QAM | 2/3 | 0010 | 2 |
| 16QAM | 3/4 | 0011 | 3 |
| 64QAM | 2/3 | 0100 | 4 |
| 64QAM | 3/4 | 0101 | 5 |
| 64QAM | 7/8 | 0110 | 6 |

Next, the bitmap of modulation information is mapping of a combination of a modulation scheme and coding rate using binary numbers, and for example, configured as shown in Table 1. The amplitude representation in the table is represented by decimal treating the bitmap with two's complement number. This amplitude is used in DCT. In this Embodiment, amplitude values are assigned in ascending order of communication efficiency, but any problem does not occur in descending order. Further, also when amplitude values are assigned in descending order of usage, any problem does not occur as long as common bitmaps are used between transmission and reception apparatuses.

Although it is assumed that the first modulation information determining section 1 as shown in FIG. 1 determines a modulation scheme and coding rate for each subcarrier from various communication conditions, for the sake of simplicity in description, SINR for each subcarrier is used as the communication conditions to determine.

[Table 2]

[Table 2]

(a)

| #S | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 |
|---|---|---|---|---|---|---|---|---|---|---|---|---|---|---|---|---|---|---|---|---|---|---|---|---|---|---|---|---|---|---|---|---|
| MU | 2 | 2 | 2 | 2 | 2 | 1 | 1 | 1 | 0 | -1 | -1 | -2 | -3 | -3 | -3 | -2 | -1 | -1 | 0 | 1 | 1 | 1 | 2 | 2 | 2 | 2 | 2 | 2 | 2 | 2 | 2 | 2 |
| #S | 33 | 34 | 35 | 36 | 37 | 38 | 39 | 40 | 41 | 42 | 43 | 44 | 45 | 46 | 47 | 48 | 49 | 50 | 51 | 52 | 53 | 54 | 55 | 56 | 57 | 58 | 59 | 60 | 61 | 62 | 63 | 64 |
| MU | 1 | 1 | 1 | 0 | 0 | -1 | -2 | -2 | -3 | -4 | -5 | -5 | -6 | -6 | -6 | -6 | -6 | -5 | -4 | -3 | -3 | -2 | -1 | -1 | 0 | 0 | 1 | 1 | 1 | 2 | 2 | 2 |

(b)

| #D | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 |
|---|---|---|---|---|---|---|---|---|---|---|---|---|---|---|---|---|---|---|---|---|---|---|---|---|---|---|---|---|---|---|---|---|
| Data | -11 | 15 | 2 | -21 | 31 | 5 | 1 | 4 | -5 | -5 | -2 | -3 | 0 | 0 | 0 | 0 | 0 | 0 | -1 | -2 | -1 | -1 | 0 | 0 | -1 | 0 | 0 | -1 | -1 | -1 | -1 | -1 |
| #D | 33 | 34 | 35 | 36 | 37 | 38 | 39 | 40 | 41 | 42 | 43 | 44 | 45 | 46 | 47 | 48 | 49 | 50 | 51 | 52 | 53 | 54 | 55 | 56 | 57 | 58 | 59 | 60 | 61 | 62 | 63 | 64 |
| Data | 0 | 1 | -1 | 0 | -1 | -1 | 0 | 0 | -1 | 0 | -1 | -2 | -1 | 0 | 0 | -1 | 0 | 0 | 0 | -2 | 0 | -1 | -1 | -1 | 0 | 0 | -1 | 0 | -1 | 0 | 0 | -1 |

(c)

| #D | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 |
|---|---|---|---|---|---|---|---|---|---|---|---|---|---|---|---|---|---|---|---|---|---|---|---|---|---|---|---|---|---|---|---|---|
| Data | -11 | 15 | 2 | -21 | 31 | 5 | 1 | 4 | -5 | -5 | -2 | -3 | 0 | 0 | 0 | 0 | 0 | 0 | -1 | -2 | -1 | -1 | 0 | 0 | – | – | – | – | – | – | – | – |
| #D | 33 | 34 | 35 | 36 | 37 | 38 | 39 | 40 | 41 | 42 | 43 | 44 | 45 | 46 | 47 | 48 | 49 | 50 | 51 | 52 | 53 | 54 | 55 | 56 | 57 | 58 | 59 | 60 | 61 | 62 | 63 | 64 |
| Data | – | – | – | – | – | – | – | – | – | – | – | – | – | – | – | – | – | – | – | – | – | – | – | – | – | – | – | – | – | – | – | – |

(d)

| #S | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 |
|---|---|---|---|---|---|---|---|---|---|---|---|---|---|---|---|---|---|---|---|---|---|---|---|---|---|---|---|---|---|---|---|---|---|
| MU | 2 | 2 | 2 | 2 | 2 | 1 | 1 | 0 | 0 | -1 | -2 | -3 | -3 | -3 | -2 | -1 | 0 | 0 | 1 | 1 | 2 | 2 | 2 | 2 | 2 | 2 | 2 | 2 | 2 | 2 | 2 | 2 |
| #S | 33 | 34 | 35 | 36 | 37 | 38 | 39 | 40 | 41 | 42 | 43 | 44 | 45 | 46 | 47 | 48 | 49 | 50 | 51 | 52 | 53 | 54 | 55 | 56 | 57 | 58 | 59 | 60 | 61 | 62 | 63 | 64 |
| MU | 1 | 1 | 1 | 0 | 0 | -1 | -2 | -2 | -3 | -4 | -5 | -5 | -6 | -6 | -6 | -6 | -6 | -5 | -4 | -3 | -3 | -2 | -1 | -1 | 0 | 0 | 1 | 1 | 1 | 2 | 2 | 2 |

(e)

| #S | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 |
|---|---|---|---|---|---|---|---|---|---|---|---|---|---|---|---|---|---|---|---|---|---|---|---|---|---|---|---|---|---|---|---|---|---|
| D.S | 0 | 0 | 0 | 0 | 0 | -1 | 0 | 0 | 0 | -1 | 0 | 0 | 0 | 0 | 0 | 0 | 0 | -1 | 0 | 1 | 0 | 0 | 0 | 0 | 0 | 0 | 0 | 0 | 0 | 0 | 0 | 0 |
| #S | 33 | 34 | 35 | 36 | 37 | 38 | 39 | 40 | 41 | 42 | 43 | 44 | 45 | 46 | 47 | 48 | 49 | 50 | 51 | 52 | 53 | 54 | 55 | 56 | 57 | 58 | 59 | 60 | 61 | 62 | 63 | 64 |
| D.S | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |

D.S:Difference component

Table 2 (a) shows an example of first modulation information that is combinations of modulation scheme and coding rate of each subcarrier determined in some state. In addition, Table 2 (a) shows amplitude representation, instead of bitmap. Further, in Table 2 (a), #S indicates a subcarrier number, and MLI indicates amplitude representation of MLI. This signal is the first modulation information as described above.

The DCT section 2 receives the data of Table 2 (a) to perform DCT, and then, inputs the resultant to the second modulation information determining section 3. The second modulation information determining section 3 compresses the data, and details of the compression method will be described in Embodiment 2. Outputs of the DCT section 2 have the same number of samples as that of inputs to the DCT section 2, and the inputs and outputs are also the real numbers. Shown herein is an example of compression.

First, the second modulation information determining section 3 normalizes the input data by the maximum value, and quantizes by six bits (converts from -32 to 31). The data quantized by six bits is shown in Table 2 (b). In Table 2 (b), #D indicates the sample number of the output of the DCT section 2, and Data indicates a value. Among outputs of the DCT section 2, high-frequency regions (that are regions of high sample numbers) are set at "0" and deleted. A signal with the high-frequency regions deleted is shown in Table 2 (c). This signal is the second modulation information.

Further, when normalization is performed by the maximum value as in this Embodiment, the second modulation information includes information about the maximum value. The reason why signals of high-frequency regions can thus be deleted is that MLI selected between adjacent subcarriers has correlation to some extent. Further, in data compression using the data space transform in the invention, the compression rate is expressed in the following equation: (Compression rate)=(Second modulation information amount)/(First modulation information amount)

Further, "0" is substituted into the high-frequency regions deleted in the second modulation information, and the value multiplied by the maximum value used previously is output. This operation is inverse compression. The inversely-compressed output data is input to the IDCT section 4, and subjected to IDCT transform. Then, the third modulation information determining section 5 performs rounding processing on fractions. The rounding processing is to approximate by the closest integer among -6 to 6. Data subjected to the rounding processing is shown in Table 2 (d). This value is the third modulation information, and by comparing this information with the bitmap used earlier, it is possible to determine the modulation scheme of each subcarrier.

Table 2 (e) shows the difference between the first modulation information and the third modulation information. The difference is an error caused by compression. Thus, although MLI of all the subcarriers cannot be designated conventionally unless 4bits x 64 (subcarriers) = 256bits are used, according to the invention, by tolerating errors somewhat, it is made possible to designate MLI of all the subcarriers using 6bits x 24(samples) = 144bits.

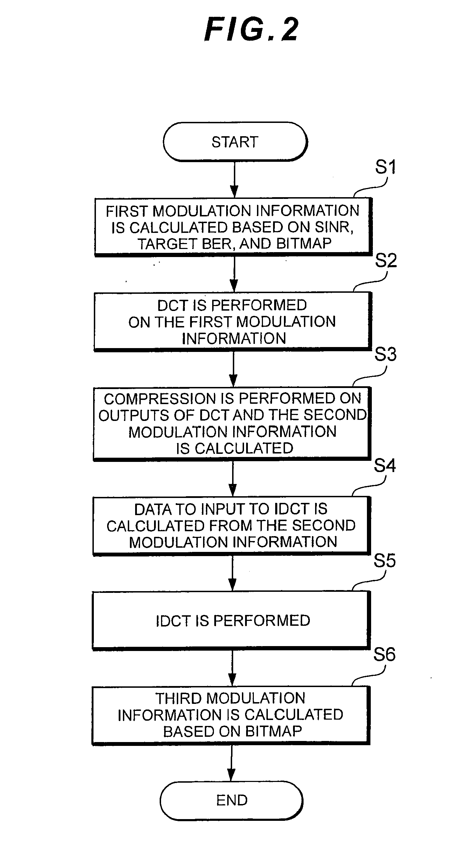

FIG. 2 is a flowchart illustrating the operation of the communication scheme determining apparatus according to Embodiment 1. The communication scheme determining apparatus calculates the first modulation information based on SINR that is an example of acquired transmission path information, modulation scheme and coding rate of each subcarrier determined by target BER, and bitmap (step S1). Next, DCT is performed on the first modulation information (step S2), compression is performed on outputs of the DCT section 2, and the second modulation information is calculated (step S3) . Then, data to input to the IDCT section 4 is calculated based on the second modulation information (step S4). This operation corresponds to inverse compression. Next, IDCT is performed on the second modulation information (step S5), and the third modulation information is calculated from the output of the IDCT section 4 and bitmap (step S6).

In addition, step S1 is the operation of the first modulation information determining section 1, steps S3 and S4 are the operation of the second modulation information determining section 3, and step S6 is the operation of the third modulation information determining section 5. The compression in step S3 means normalization, quantization and deletion of high-frequency components in Embodiment 1.

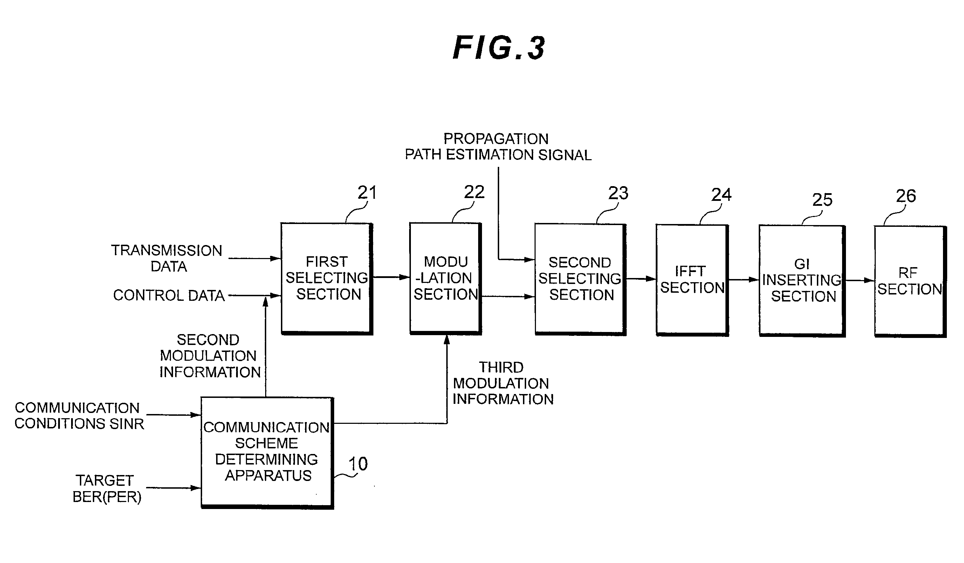

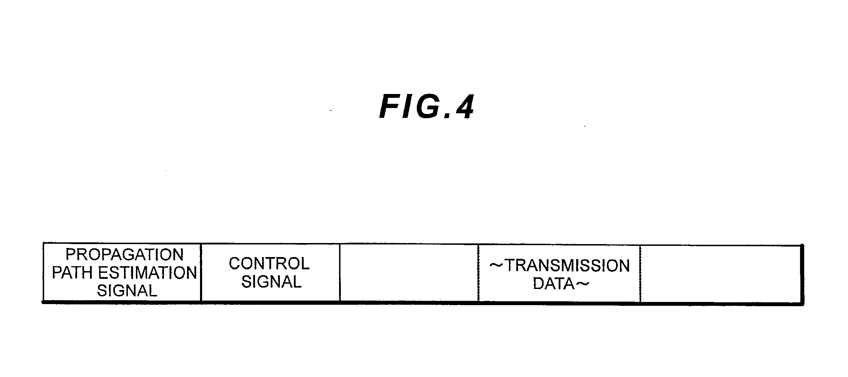

Described next is a transmission apparatus provided with the communication scheme determining apparatus according to Embodiment 1. FIG. 3 is a block diagram illustrating a schematic configuration of the transmission apparatus according to Embodiment 1. FIG. 3 shows only simplified blocks required for OFDM adaptive modulation. Further, FIG. 4 is a diagram showing an example of data format in transmitting data in the transmission apparatus as shown in FIG. 3.

In FIG. 3, a first selecting section 21 selects either the transmission data or second modulation information to output. A modulation section 22 performs error correcting coding and modulation for each subcarrier. A second selecting section 23 selects either an output of the modulation section 22 or a propagation path estimation signal to output. An IFFT section 24 performs IFFT (Inverse Fast Fourier Transform) on the input. A GI inserting section 25 inserts a guard interval (GI). An RF section 26 converts the signal into an analog signal, and further, converts the signal into a signal with a bandwidth and power to transmit. Meanwhile, a communication scheme determining apparatus 10 corresponds to the communication scheme determining apparatus as shown in FIG. 1.

The transmission apparatus transmits data based on the format as shown in FIG. 4. First, the second selecting section 23 selects a propagation path estimation signal, and an OFDM signal for propagation path estimation is transmitted. The propagation path estimation signal is assumed to a signal known between the transmission and reception apparatuses. Next, to transmit control data including at least the second modulation information, the first selecting section 21 selects the control data. For this signal, the modulation section 22 performs error correcting coding and subcarrier modulation to generate an OFDM symbol, and a control signal is transmitted. At this point, the coding rate of error correcting coding and modulation scheme of subcarrier modulation are assumed to be known between the transmission and reception apparatuses.

Next, the data is transmitted. At this point, the first selecting section 21 selects the transmission data. The modulation section 22 performs error correcting coding and modulation of each subcarrier according to the third modulation information to generate an OFDM symbol, and the data is transmitted.

By providing such a configuration of the transmitter, it is possible to transmit MLI that is compressed using DCT and transmit a subcarrier adaptive modulation OFDM signal.

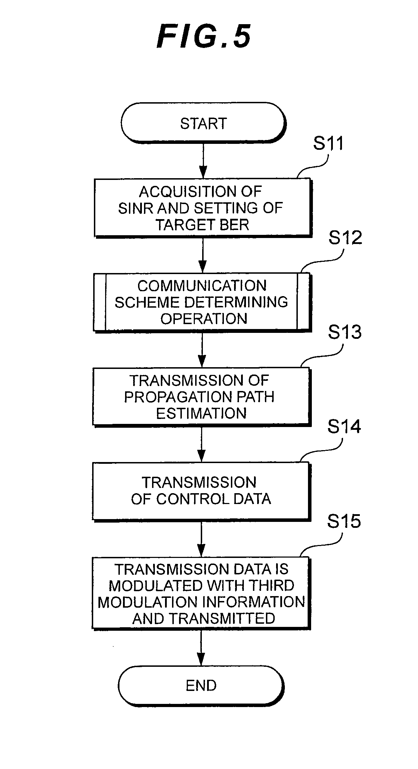

FIG. 5 is a flowchart illustrating the operation of the transmission apparatus according to Embodiment 1. First, the apparatus acquires SINR that is an example of transmission path information, and sets target BER (step S11). Next, the communication scheme determining apparatus performs the operation (step S12). Details of the operation are as shown in FIG. 2. Then, the transmission apparatus transmits a signal for propagation path estimation (step S13), and further, transmits the control information including at least the second modulation information determined in step S12 (step S14).

Next, the transmission apparatus transmits the data modulated for each subcarrier based on the third modulation information (step S15). Herein, this Embodiment is based on the premise that communication is performed with the format as shown in FIG. 4, and therefore, shows that the operation of steps S13 to S15 is performed in this order, but the invention is not limited thereto.

(Embodiment 2)

In this Embodiment, detailed descriptions are given to the compression in the second modulation information determining section 3 as shown in FIG. 1. Further, comparison with information compression using the difference is performed last to show that the scheme proposed herein is more suitable for the next-generation radio communication system.

Embodiment 1 describes the method of setting signal components in high-frequency regions at zero and thereby compressing the data. Meanwhile, data of samples that are not deleted undergoes uniform quantization. Since DCT is performed on the MLI data having correlation in the subcarrier direction, signal output components are centered on low-frequency regions. By using this property, components of the high-frequency regions are deleted, and in addition thereto, by varying the number of bits used in quantization also in used frequency regions, it is possible to compress the data with efficiency and accuracy.

In the example as described previously, the data of 24 samples in the low-frequency regions is quantized by 6 bits, and shown herein is the case where data of 16 samples is quantized by 6 bits, and data of subsequent 16 samples is quantized by 3 bits. The total number of bits is the same. In addition, in the following description, it is assumed that Case 1 is the case of performing constant quantization (6 bits for data of 24 samples) on outputs of DCT as shown in Embodiment 1, and that Case 2 is the case of performing different quantization (6 bits for data of 16 samples, 3 bits for data of subsequent 16 samples).

[Table 3]

(a)  (b)  (c)  (d)  (e)

The number of required bits is "144" and the same in both Case 1 and Case 2, and a single maximum value is used for normalization in Case 1, while a single maximum value is set on each of the 6-bit quantization region and 3-bit quantization region in Case 2. Table 3 (a) to (c) shows the first modulation information, second modulation information and third modulation information in Case 2. The pattern of Table 3 (a) is the same as that of Table 2 (a) to compare. Further, Table 3 (d) shows the difference in output between the first modulation information and the third modulation information. By comparing Table 3 (d) with Table 2 (e) showing the difference between the first modulation information and the third modulation information in Case 1, it is understood that errors of the compression method indicated by Case 2 are reduced by "1" as compared with errors of the compression method indicated by Case 1. This means that characteristics are improved by using the data of samples in the high-frequency regions even when allocation of the information amount is a few.

Thus, DCT outputs are divided into some regions, normalized by the maximum value in each region, and quantized by the different number of bits in each region, and it is thereby possible to perform compression with few errors.

Further, in the foregoing, the maximum value used in normalization is treated as an ideal value. However, in the actual system, it is required to notify of the maximum value as the second modulation information, and it is necessary to pay attention to the information amount required for such notification. As measures against the information amount, instead of normalization by the maximum value, such a method is considered for representing outputs of DCT by floating point, normalizing only by the characteristic of the maximum value, and using only the characteristic used in normalization as the second modulation information. This operation is almost equal to providing all the samples with a bit shift not causing an overflow even in carrying the maximum value in a fixed-point representation, and notifying of the shift amount.

Table 3 (e) shows the difference between the first modulation information and the third modulation information in performing normalization by only the characteristic of the maximum value, instead of normalization by the maximum value. Although the number of errors is higher than that in Table 3 (d), Table 3 (e) indicates that the information amount on normalization can be reduced. By thus simplifying normalization, the property deteriorates slightly, but such a merit arises that the processing circuit regarding normalization can be simplified.

Next, evaluations by simulation are made to show the effects of this Embodiment. In addition, the effects by simulation are shown in also Embodiments 3 to 5, and unless otherwise specified, the parameters are the same as shown herein. The evaluations are shown by the number of errors (the difference between the first modulation information and the third modulation information) when the compression rate is varied. As principal parameters in the adaptive subcarrier modulation OFDM system, the number of subcarriers is "64", and the number of kinds (modulation scheme and coding rate) in subcarrier modulation is "13" (the first modulation information requires 4 bits for each subcarrier, and the total control information amount is 4bits x 64 subcarriers = 256bits.)

Propagation path environments used in evaluations are three kinds of Rayleigh distribution models with same power, the number of delayed paths is "2", "4" or "6", and delay dispersion of each propagation path is normalized by the OFDM symbol length and 0.5/64, 1.25/64 or 2.92/64. In the following description, delay dispersion normalized by the OFDM symbol length is referred to as "normalized delay dispersion". The other parameters not specified particularly are assumed to be all ideal, and simulations were performed. Further, compression by difference was used as a comparison method. In the evaluations, for the DCT method, the compression method was used for dividing outputs of DCT by 8 samples and performing normalization by bit shift as described above.

[Table 4]

(a)

| | T.C.R | A.C.R | T.N.B | #1~#8 | #9~#16 | #17~#24 | #25~#32 | #33~#40 | #41~#48 | #49~#56 | #57~#64 | N.N.B |
|---|---|---|---|---|---|---|---|---|---|---|---|---|
| (a) | 3/4 | 0.765625 | 196 | 8 | 6 | 4 | 2 | 2 | 0 | 0 | 0 | 20 |
| | 1/2 | 0.5625 | 144 | 6 | 4 | 4 | 2 | 0 | 0 | 0 | 0 | 16 |
| | 1/4 | 0.34375 | 88 | 6 | 4 | 0 | 0 | 0 | 0 | 0 | 0 | 8 |
| | 1/8 | 0.140625 | 36 | 4 | 0 | 0 | 0 | 0 | 0 | 0 | 0 | 4 |

(b)

| | T.C.R | A.C.R | T.N.B | D.I | R.MI |
|---|---|---|---|---|---|
| (b) | 3/4 | 0.78125 | 200 | $3\times56$ | $4\times8$ |
| | 1/2 | 0.5625 | 144 | $2\times56$ | $4\times8$ |
| | 1/4 | 0.34375 | 88 | $1\times56$ | $4\times8$ |
| | 1/8 | 0.125 | 32 | $0\times56$ | $4\times8$ |

T.C.R: Target compression rate
A.C.R. Actual compression rate
T.NB. The total number of bits
NNB: The number of normalization bits
D.I: Difference information
RMI: Reference modulation information

Table 4 (a) shows the output sample number and the number of quantization bits used in the sample number. The target compression rate of Table 4 (a) is the case of eliminating the number of bits required for normalization, and the actual compression rate is a value obtained by adding the number of bits required for normalization. In the difference method used in comparison, it is assumed that modulation information (herein, 4 bits) as a reference is transmitted every eight subcarriers to prevent an error from propagating, and that for the other subcarriers, the difference information from the reference value is represented by the information amount less than 4 bits.

Table 4 (b) shows the relationship between the target compression rate and the number of bits. Since the modulation information of subcarriers prior to compression is 4 bits, and therefore, the difference value is any one of 1, 2 and 3 bits i.e. the target compression rates are 1/4, 1/2 and 3/4. The difference from the actual compression rate is that the reference modulation information is used every eight subcarriers. Since it is difficult to achieve the target compression rate of 1/8 using the difference method, grouping is substituted (the same modulation scheme is set every eighth subcarriers). Hereinafter, the DCT method, difference method and each target compression rate X are represented by DCT-X and DIFF-X.

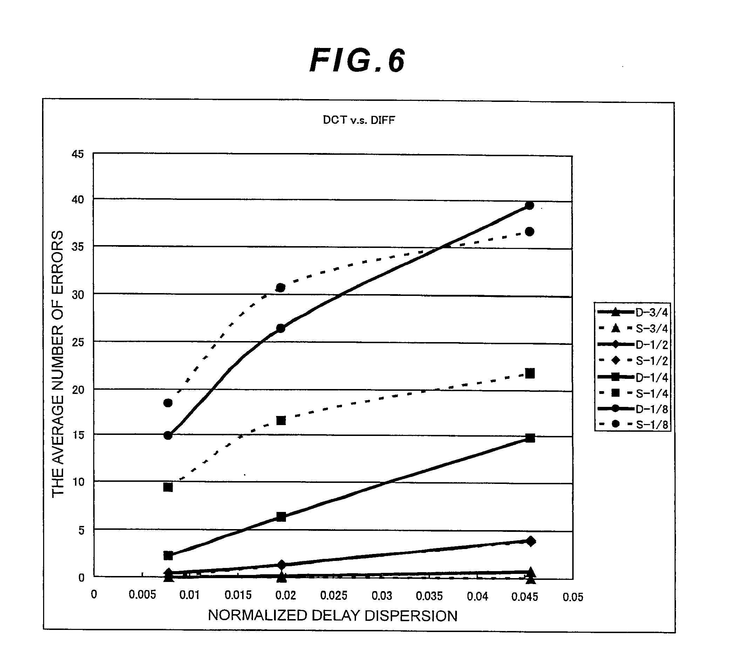

FIG. 6 is a graph showing the DCT method for delay dispersion, and the average number of errors (the difference between the first modulation information and the third modulation information) in the difference method. The horizontal axis represents normalized delay dispersion, and the vertical axis represents the average number of errors. In FIG. 6, D-x shows the property concerning compression by DCT of target compression rate x, and S-x shows compression by the difference method of target compression rate x. From FIG. 6, it is understood that the difference method is superior when the compression efficiency is low, and that the DCT method is superior as the compression efficiency is increased. Particularly, when the compression rate is set at 1/4, the DCT method is superior. Since it is desired in the next-generation communication system to lower the compression rate and to be able to support large delay dispersion, it is understood that the DCT method is superior to the difference method.

Hereinafter, Embodiments 3 to 5 describe cases that compression is performed while selecting from a plurality of compression rates and compression patterns. In addition, the method of selecting the compression rate and compression pattern is applied to notification of CQI (Channel Quality Information). The actual method is simpler than MLI notification, and as a representative example, Embodiment 7 shows application to CQI of Embodiment 4.


(Embodiment 3)

In the Embodiments as described above, the descriptions are made on the assumption that a single compression method is used after DCT in the system or transmission apparatus. However, as can be seen from FIG. 6, in order to efficiently perform compression, it is understood that varying the compression rate corresponding to the propagation path is superior. This Embodiment describes a communication scheme determining apparatus for varying the compression rate corresponding to delay dispersion of the propagation path to perform communications, and a transmission apparatus of the OFDM adaptive modulation system using the communication scheme determining apparatus.

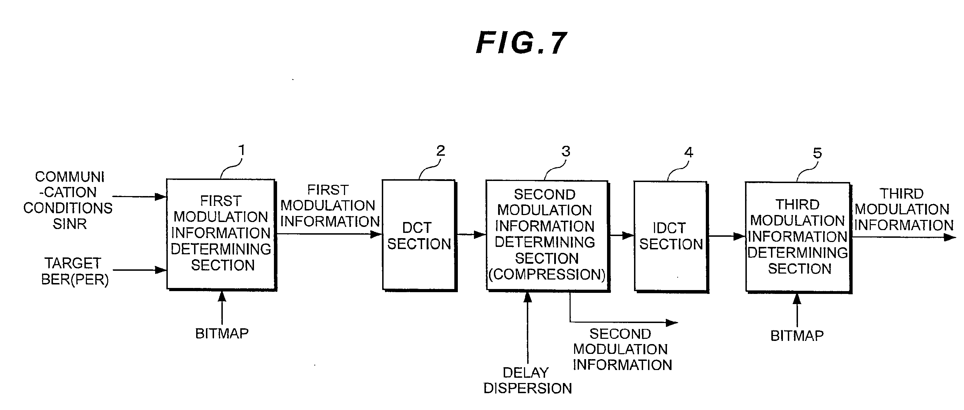

FIG. 7 is a block diagram illustrating a schematic configuration of a communication scheme determining apparatus according to Embodiment 3. Blocks having the same functions as in FIG. 1 are assigned the same numbers to omit descriptions thereof. In other words, a second modulation information determining section 33 differs from that shown in FIG. 1. The second modulation information determining section 33 receives information about delay dispersion of the propagation path, and determines the compression scheme. It is herein assumed that the compression scheme is selected from four, DCT-1/4, DCT-1/2, DCT-3/4 and non-compression (DCT-1), described in Embodiment 2.

DCT-1/4 is selected when used normalized delay dispersion of the propagation path is less than 0.5/64. By this means, the average number of errors is about "2". Further, DCT-1/2 is selected when normalized delay dispersion is 0.5/64 or more and less than 1.25/64. By this means, the average number of errors is about "1". Furthermore, DCT-3/4 is selected when normalized delay dispersion is 1.25/64 or more and less than 2.92/64. By this means, the average number of errors is about "2". When normalized delay dispersion is 2.92/64 or more, DCT-1 is selected. In other words, compression is not performed. By thus varying the compression rate as appropriate, it is possible to actualize the communication scheme determining apparatus for determining the modulation information with few errors while reducing the control information. The example as a value of normalized delay dispersion as a reference is shown herein, but is an example, and is not inevitable.

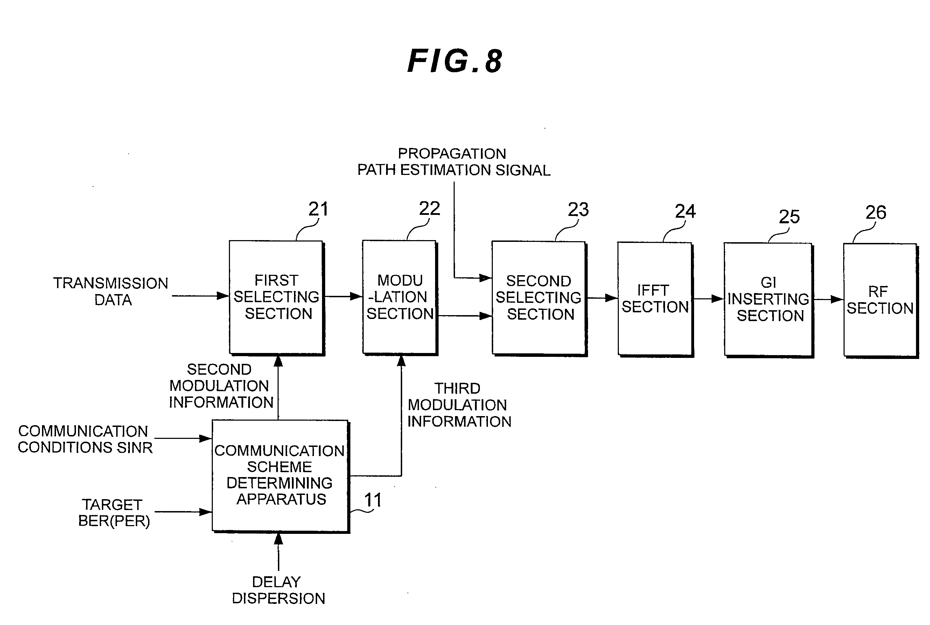

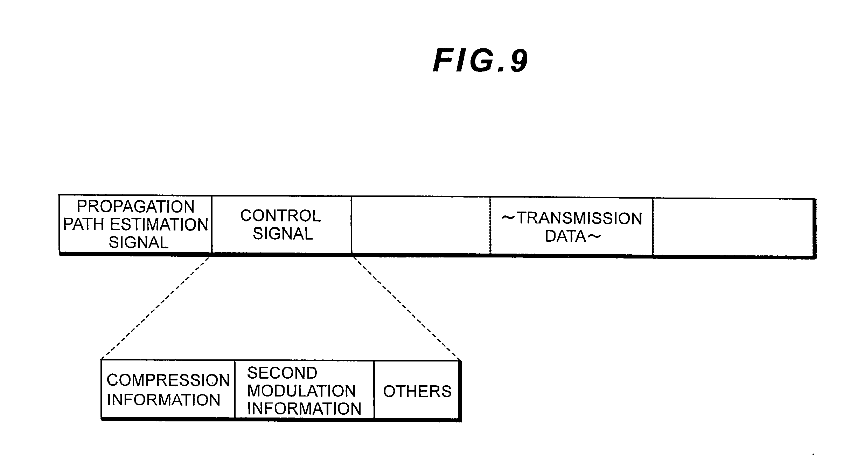

FIG. 8 is a block diagram illustrating a schematic configuration of a transmission apparatus provided with the communication scheme determining apparatus according to Embodiment 3. Blocks having the same functions as in the transmission apparatus shown in FIG. 3 are assigned the same numbers to omit descriptions thereof. In other words, a communication scheme determining apparatus 11 differs from that as shown in FIG. 3. As the communication scheme determining apparatus 11 is used the communication scheme determining apparatus as shown in FIG. 7. Further, the second modulation information is given the information of which compression method is used. FIG. 9 is a diagram showing an example of packet format used in the transmission apparatus as shown in FIG. 8. The example is similar to that shown in FIG. 4, and the transmission apparatus performs the same operation. However, details of the control information show addition of compression information.

More specifically, for example, considered is the case of using 2 bits as the compression information. Corresponding to the 2 bits, by setting that "00" represents DCT-1, "01" represents DCT-3/4, "10" represents DCT-1/2, and that "11" represents DCT-1/4, it is possible to transmit the information about compression.

(Embodiment 4)

Embodiment 3 shows the example of varying the compression rate according to normalized delay dispersion of the propagation path, and fluctuations always occur in the difference between the first modulation information and the third modulation information i.e. the error component.

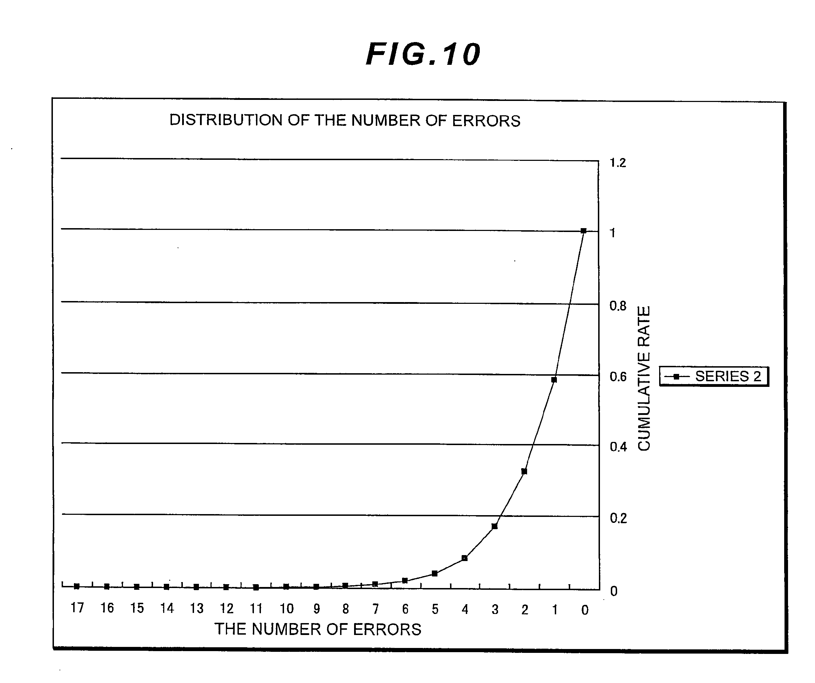

FIG. 10 is a graph showing fluctuations in the number of errors when delay dispersion is 1.25/64 and the compression rate is 1/2 (DCT-1/2). The horizontal axis represents the number of errors, and the vertical axis represents the rate being more than the number of errors. When DCT-1/2 is used in this delay dispersion, the average number of errors is about "1.2", but as can be seen from FIG. 10, the case that the number of errors is "5" or more is slightly observed. If the number of errors allowable in the system is up to "4", 5% of packets are erroneous with the high probability in this scheme.

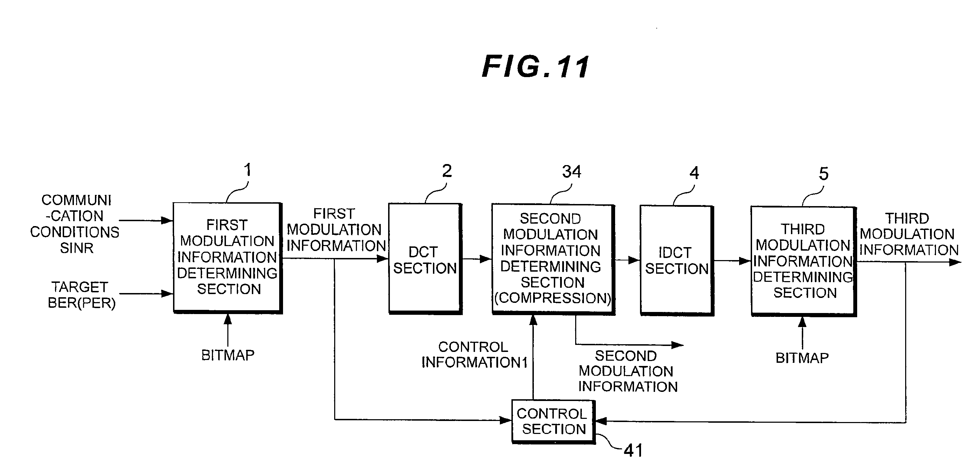

Herein, this Embodiment shows a method of monitoring the number of errors and selecting a compression rate enabling the number of errors to be a predetermined number or less. FIG. 11 is a block diagram illustrating a schematic configuration of a communication scheme determining apparatus used in this Embodiment. Blocks having the same functions as in the communication scheme determining apparatus shown FIG. 1 are assigned the same numbers to omit descriptions thereof. In other words, a second modulation information determining section 34 differs from that shown in FIG. 1, and is given a control section 41. The second modulation information determining section 34 determines the compression rate from a control signal input from the control section 41. Accordingly, when the first modulation information is input once, the section 34 may operate a plurality of times. Further, with the operations, the IDCT section 4 and the third modulation information determining section 5 operate a plurality of times. The operations of a plurality of times can be substituted by using a plurality of communication scheme determining apparatuses having the same functions to finally compare, but in consideration of increases in circuit scale, this Embodiment shows the case that a single communication scheme determining apparatus operates a plurality of times to determine a compression rate.

The control section 41 receives the first modulation information and the third modulation information. The control section 41 first outputs an arbitrary compression rate determined in the system as control information 1. Then, the section 41 compares the calculated third modulation information with previously input first modulation information, and when the number of errors is within the predetermined number, suspends the operation to adopt these values as the modulation information. When the number of errors exceeds the predetermined number, the section 41 varies the compression rate, and operates the second modulation information determining section 34 again. By such repetition, the compression rate is selected so that the number of errors is the predetermined number.

Described next is the operation that the communication scheme determining apparatus performs according to the control of the control section 41. To simplify the descriptions, it is assumed that the compression rates are four, 1/8, 1, 4, 1/2 and 1, and that the predetermined number of errors is X (X is any integer of "0" or more and determined by the system). It is further assumed that the compression rate of 1/8 is selected in the first operation to minimize the compression rate.

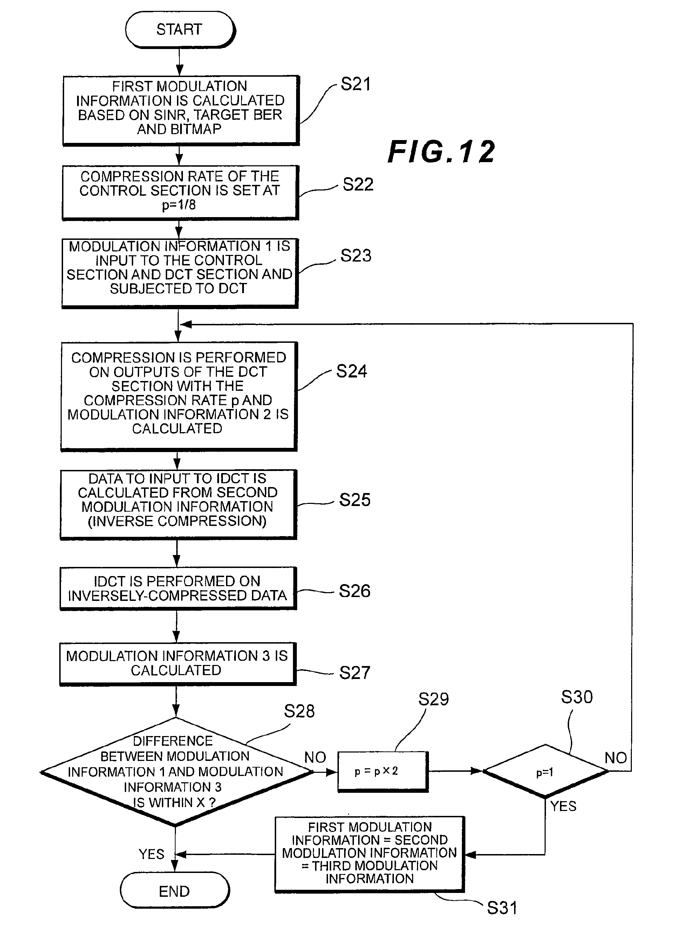

FIG. 12 is a flowchart illustrating the operation of the communication scheme determining apparatus according to Embodiment 4. First, the apparatus calculates the first modulation information from SINR or the like (step S21). Next, the apparatus sets the compression rate p at an initial value, herein 1/8 (step S22). Then, the first modulation information is input to the DCT section 2 to undergo DCT, while being input to the control section 41 (step S23), and outputs of DCT are compressed with the compression rate p to calculate the second modulation information (step S24).

Next, the second modulation information calculated in step S24 is subjected to inverse compression (step S25), and IDCT is performed on the inversely-compressed data (step S26). Based on the result of IDCT, the third modulation information is calculated (step S27), and compared with the first modulation information, and it is determined whether the error is within the predetermine value i.e. within X (step S28). When the error between the first modulation information and the third modulation information is not within X, the compression rate p is doubled (step S29), and it is determined whether p is "1" (step S30). When p is not "1", the processing flow proceeds to step S24. When p is "1", it is meant that compression cannot be performed, the first to third modulation information is assumed to be the same as one another (step S31), and the processing is finished. Meanwhile, in step S28, when the error between the first modulation information and the third modulation information is within X, the processing is finished.

This flowchart adopts the form that the compression rate is doubled to vary, but the invention is not limited thereto, and only requires the constitution of trying all the set compression rates. Further, the lowest compression rate is set as an initial value, but the invention is not limited thereto, and by setting a value used in last communication, value estimated from delay dispersion or the like, it is possible to reduce the number of calculations. Furthermore, the scheme of not compressing is adopted, but is not always necessary, and any problem does not occur in a constitution where the flow is finished by a predetermined compression rate.

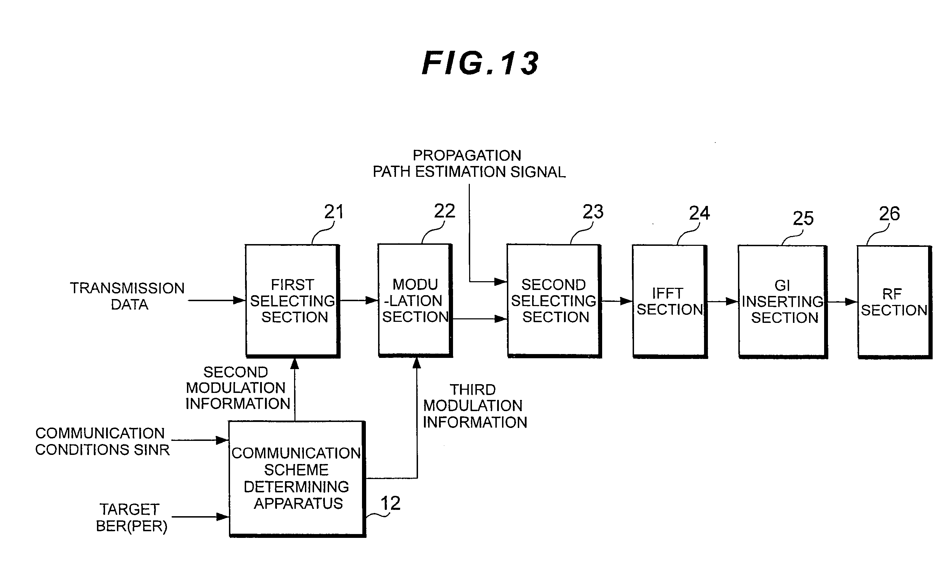

FIG.13 is a block diagram illustrating a schematic configuration of a transmission apparatus provided with the communication scheme determining apparatus according to Embodiment 4. Blocks having the same functions as in the transmission apparatus shown in FIG. 3 are assigned the same numbers to omit descriptions thereof. In other words, a communication scheme determining apparatus 12 differs from that as shown in FIG. 3. As the communication scheme determining apparatus 12 is used the communication scheme determining apparatus as shown in FIG. 11.

This transmission apparatus performs the same operation as in the transmission apparatus shown in FIG. 3. Further, since it is necessary to notify of the compression information, the packet structure is the same as in FIG. 9.

As described above, Embodiment 4 shows the example of selecting the method with the highest compression efficiency within the range of permissible errors. Next, the effect of Embodiment 4 is verified by simulation. The simulation was performed using the method of selecting the compression rate from among four rates, 1/8, 1/4, 2/3, 3/4 (four rates described in Table 4 (a)) with the number of permissible errors being five. The propagation path model is the normalized delay dispersion of 1.25/64. Further, the case of setting the compression rate at a constant value of 1/2 is used to compare.

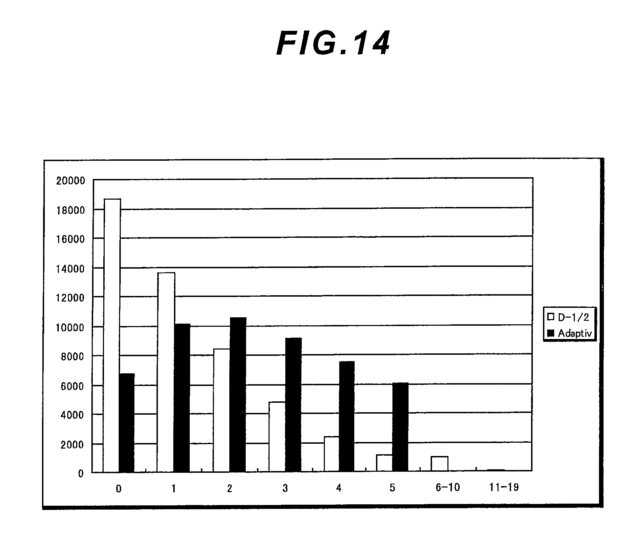

FIG. 14 is a graph showing the number of errors and the number of times the number of errors is obtained, the horizontal axis represents the number of errors, and the vertical axis represents the number of times the number of errors is obtained. In FIG. 14, D-x represents the compression by DCT with the compression rate of x. D-1/2 represents the case where the compression rate is constantly 1/2, and Adaptive represents the method of selecting the compression rate as appropriate shown in Embodiment 4. The number of all the trials is 50,000. According to FIG. 14, it is understood that the case of the constant value of 1/2 provides a large number of times that the error is zero, but has the distribution having six or more errors.

According to the method as shown in Embodiment 4, although the number of times the error is zero is reduced, six or more errors seldom occur.

[Table 5]

| D-3/4 | D-1/2 | D-1/4 | D-1/8 |
|---|---|---|---|
| 1007 | 22399 | 25906 | 688 |

Further, Table 5 shows the number of times that each compression rate was selected in 50,000 trials. When compression was not performed at all, the control information amount required in 50,000 trials is 4x64x50000=12800000bits.

Such an amount is reduced to 7200000 bits in D-1/2, and further, reduced to 5827324 bits in the method of Embodiment 4. In addition, two bits to notify of the compression rate are considered in this control information amount. By this means, it is understood that it is possible to control the number of errors within the permissible range, while reducing the total control information amount.

(Embodiment 5)

Although embodiments 3 and 4 show the example of varying the compression rate on a packet basis, there is the case that processing is easier when the control information is constant depending on the system. Therefore, this Embodiment shows an example of varying the number of quantization bits for each sample subjected to DCT with the compression rate kept constant, and thereby minimizing errors.

[Table 6]

| | Target Rate | Actual Rate | #1-8 | #9-16 | #17-24 | #25-32 | #33-40 | Normalization Bit |
|---|---|---|---|---|---|---|---|---|
| D-1/2A | 1/2 | 0.5625 | 8 | 4 | 2 | 2 | 0 | 16 |
| D-1/2B | 1/2 | 0.5625 | 7 | 4 | 3 | 2 | 0 | 16 |
| D-1/2C | 1/2 | 0.5625 | 6 | 4 | 4 | 2 | 0 | 16 |
| D-1/2D | 1/2 | 0.5625 | 4 | 4 | 4 | 4 | 0 | 16 |

Four patterns with the target compression rate of 1/2 are used as an example. Table 6 shows the four compression patterns. In Table 6, as the pattern changes from D-1/2A to D-1/2D, the information amount allocated to high-frequency regions is increased. A communication scheme determining apparatus and transmission apparatus for implementing this Embodiment have the same configurations respectively as shown FIG. 11 and FIG. 13. However, the difference arises in the control in the communication scheme determining apparatus. Further, as in Embodiment 4, using a plurality of communication scheme determining apparatuses omits the loop of the operation as described below, but in consideration of increases in circuit scale, such a method is described that a single communication scheme determining apparatus determines the compression pattern.

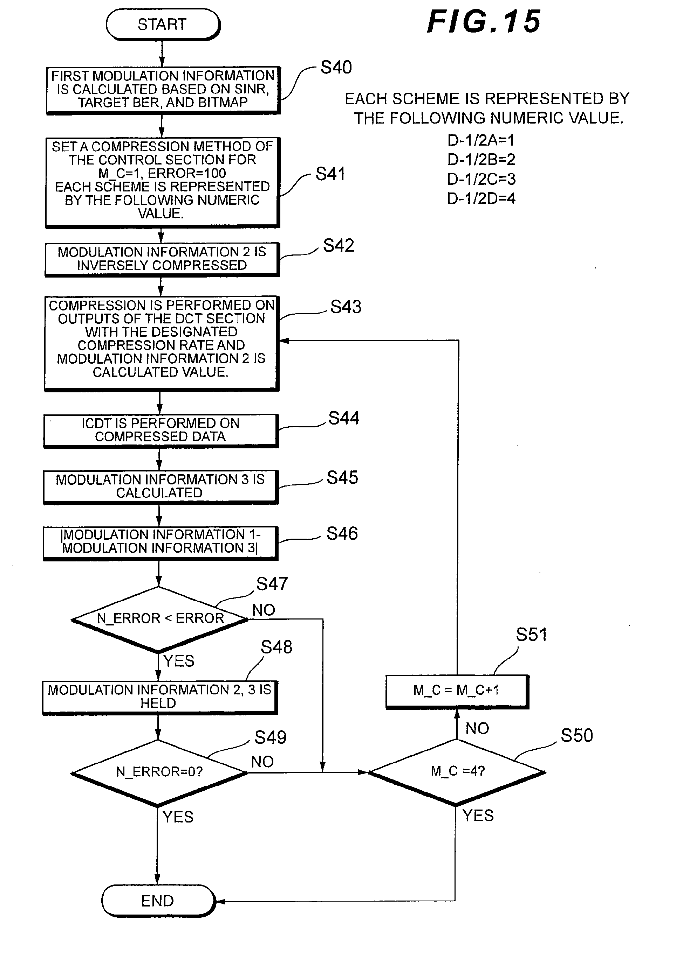

FIG. 15 is a flowchart illustrating the operation that the communication scheme determining apparatus performs according to control of the control section 41. In addition, in the flowchart, it is assumed that compression pattern M_C is represented by numeric values ranging from "1" to "4", and represents each of compression patterns A to D. Further, ERROR is an initial value of the number of errors, and set at "100" in the figure, and any high value does not provide any problem.

First, in the same way as described in the forgoing, the apparatus calculates the first modulation information (step S40). Next, the apparatus sets M_C=1 and ERROR=100 (step S41), and the first modulation information is input to the DCT section 2 to undergo DCT, while being input to the control section 41 (step S41). Then, compression is performed with the compression pattern set on M_C, and the secondmodulation information is calculated (step S43). Next, inverse compression is performed based on the second modulation information (step S52), IDCT is performed on the inversely-compressed data (step S44), and the third modulation information is calculated (step S45).

Next, the absolute value of the difference between the first modulation information and the third modulation information is input to N_ERROR (step S46), and N_ERROR is compared with ERROR (step S47). When N_ERROR is smaller than ERROR, N_ERROR is substituted into ERROR, M_C is substituted into M_D that is a candidate for the compression method, and values of the second and third modulation information are held (step S48). In the first loop, since ERROR is set at a large value, the processing flow certainly proceeds to step S48 from step S47. Conversely, it is preferable to set an initial value of ERROR at a large value meeting this condition. Then, it is determined whether or not N_ERROR is zero (step S49), and when N_ERROR is zero, the processing is finished to determine the compression method and second and third modulation information. Herein, by comparing with zero, it is possible to select a compression method that minimizes the error from among compression candidates. Naturally, when errors are permitted to some extent, in consideration of reductions in the number of loops, the permissible error value is compared for the operation.

When ERROR is smaller than N_ERROR in step S47 and N_ERROR is not zero in step S49, for operation using a next compression pattern, it is determined any candidate remains (step S50). In this example, since candidate compression patterns are from "1" to "4", it is determined whether or not M_C is "4". When M_C is "4", since it is meant that any candidate does not remain, the processing flow is finished. In this case, M_D set in this stage is an optimal compression pattern, and the held second modulation information and third modulation information is used. When it is determined that a candidate remains in step S50, "1" is added to M_C (step S51), and a series of flow is tried again using the next compression pattern.

As described above, Embodiment 5 shows the method of selecting a compression pattern that minimizes the number of errors from among a plurality of compression patterns. The properties were examined by simulation using the compression patterns as shown previously. Normalized delay dispersion used in evaluation was 1.25/64, and as a target for comparison was used the case of performing compression using only D-1/2C in Table 6.

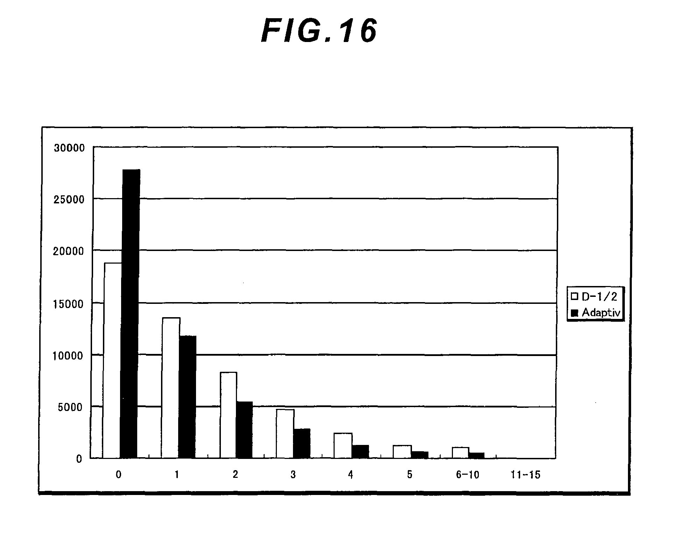

As in FIG. 14, FIG. 16 is a graph showing the number of errors and the number of times the number of errors is obtained. In FIG. 16, D-1/2 represents the case where the compression rate is constantly 1/2, and Adaptive represents the method of selecting the compression rate as appropriate shown in Embodiment 5. The horizontal axis represents the number of errors, and the vertical axis represents the number of times the number of errors is obtained. The number of all the trials is 50,000. From FIG. 16, it is understood that the distribution of the number of errors spreads over the region with fewer errors by performing selection as described in this Embodiment. In addition, the average number of errors is reduced to 0.893 from 1.34.

Embodiment 4 shows the method of varying the compression rate to select, and Embodiment 5 shows the method of varying the compression pattern to select without varying the compression rate, but naturally, it is possible to combine two methods to use.

(Embodiment 6)

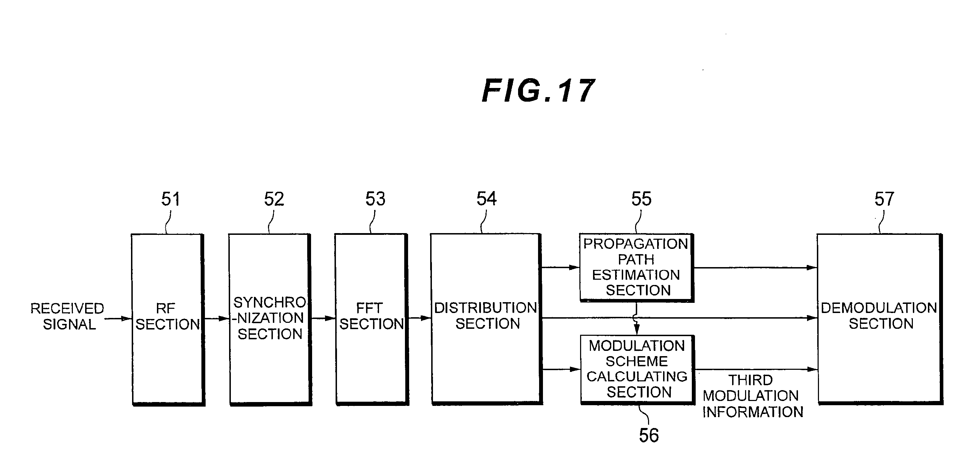

This Embodiment shows a reception apparatus corresponding to the transmission apparatus as shown in Embodiments 1, 3, 4 and 5. FIG. 17 is a block diagram illustrating a schematic configuration of the reception apparatus according to this Embodiment. In FIG. 17, an RF section 51 converts a received signal into a signal of signal processing-capable band and outputs a digital signal. A synchronization section 52 extracts an effective symbol of an OFDM signal. An FFT section 53 performs fast Fourier transform. A distribution section 54 distributes the received signal corresponding to the application. A propagation path estimation section 55 performs propagation path estimation based on a received propagation path estimation signal. A modulation scheme calculating section 56 calculates a modulation scheme of each subcarrier in data from the propagation path estimation value and the OFDM symbol transmitting the control information. A demodulation section 57 performs demodulation of the data including error correction from the propagation path estimation value and the calculated modulation scheme of each subcarrier.

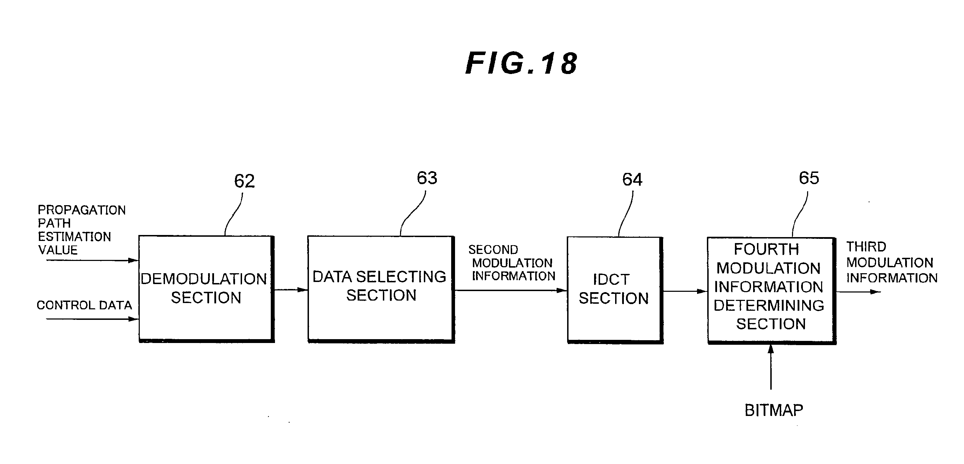

FIG. 18 is a block diagram illustrating an internal configuration of the modulation scheme calculating section 56. In FIG. 18, a demodulation section 62 performs demodulation of the data including error correction of each subcarrier from the propagation path estimation value. In addition, for the control data, it is assumed that both of the modulation scheme and error correcting scheme are known between the transmission and reception apparatuses. A data selecting section 63 extracts the second modulation information generated in the transmission apparatus from the demodulated control data. The second modulation information includes data concerning normalization as described in Embodiment 2, data concerning the compression rate as described in Embodiments 3 and 4, data concerning the compression patter as described in Embodiment 5 and the like. An IDCT section 64 performs IDCT based on the second modulation information. A fourth modulation information determining section 65 calculates the third modulation information from the result of IDCT and bitmap. This IDCT section 64 and fourth modulation information determining section 65 respectively have the same functions as those of the IDCT section 4 and third modulation information determining section 5 in the communication scheme determining apparatus of FIG. 1, etc.

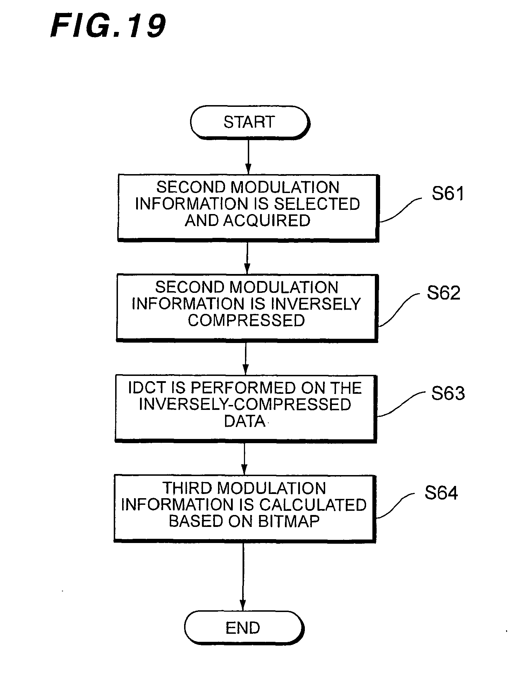

FIG. 19 is a flowchart illustrating the operation that reception apparatus calculates the third modulation information used in modulation of a data part in the transmission apparatus. First, the second modulation information is extracted from the control data (step S61), and is subjected to the same inverse compression as that performed on the second modulation information in the transmission apparatus (step S62). Next, IDCT is performed on the inversely-compressed data (step S63), and the third modulation information is calculated (step S64) from the same bitmap as that used in the transmission apparatus and the output of IDCT (step S64).

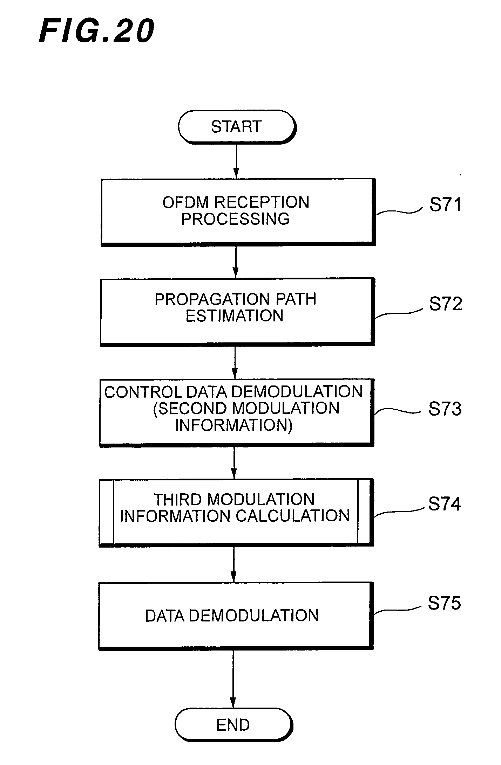

FIG. 20 is a flowchart illustrating the operation of the reception apparatus. This reception apparatus first performs OFDM reception processing (step S71). This reception processing includes the operation required for the OFDM signal processing such as OFDM symbol synchronization, frequency synchronization and the like. Next, the apparatus estimates a propagation path from the propagation path estimation symbol (step S72), and performs demodulation of the control data (step S73). The modulation scheme of each subcarrier to transmit the control data is assumed to be beforehand known between the transmission and reception apparatuses. Subsequently, the third modulation information is calculated (step S74). The flowchart illustrating this operation is already shown in FIG. 19. Then, demodulation of transmission data is performed from the third modulation information and propagation path estimation value (step S75).

The function important in the modulation scheme calculating section 56 shown in FIG. 17 is to make the calculation accuracy and calculation method (overflow processing, and rounding processing during the calculation) of the IDCT section 64 shown in FIG. 18 equal extents of IDCT in the modulation scheme determining section in the transmission apparatus. When this condition is not satisfied, even using the same second modulation information, the difference occurs in the calculated third modulation information. Further, the bitmap used in the fourth modulation information determining section 65 needs to be the completely same as that used in the transmission apparatus. Concurrently, the criterion and method of the rounding processing need also to be the same.

Each Embodiment as described in the foregoing shows the example of transmitting the control information concerning the modulation information and transmitting the data modulated based on the control information. This means that the Embodiments can be used as a downlink communication method in the cellular system. Further, although this Embodiment gives the description with particular emphasis on DCT and IDCT as a data transform method to compress, it is possible to apply DST (Discrete Sine Transform) and discrete wavelet transform. In addition, since the energy is centered on low-frequency regions from the property of the propagation path, using DCT enables compression to be performed with the highest efficiency.

(Embodiment 7)

This Embodiment shows an example of applying the MLI compression technique to CQI compression technique. In addition, the Embodiment described herein corresponds to Embodiment 4 of the MLI compression technique as described previously, but is not limited thereto, and the application of this Embodiment to Embodiments 3 and 5 can be conceived easily from Embodiment 7. Therefore, examples of applying to Embodiments 3 and 5 are omitted.

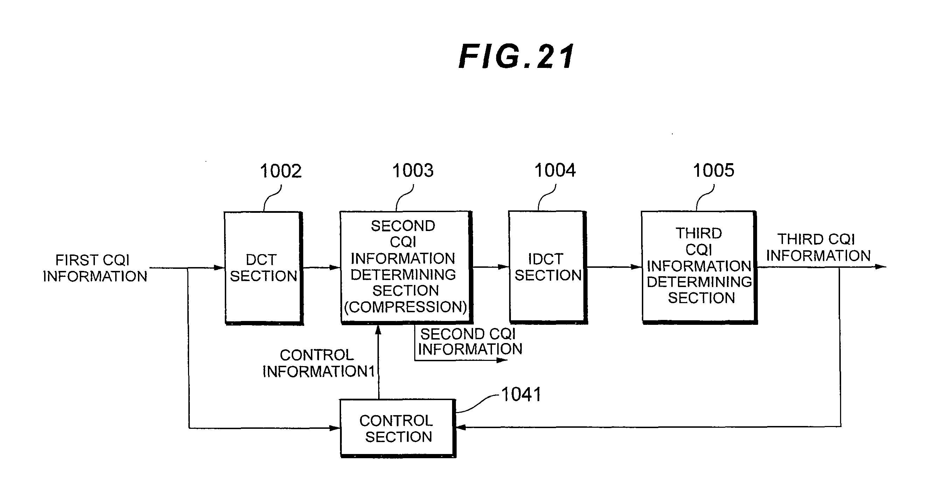

FIG. 21 is a block diagram illustrating a schematic configuration of a CQI information determining apparatus as the communication scheme determining apparatus. The CQI information determining apparatus according to this Embodiment is comprised of a DCT section 1002, second CQI information determining section 1003, IDCT section 1004, third CQI information determining section 1005 and control section 1041. To facilitate correspondence with the communication scheme determining apparatus as shown in FIG. 11, the form omits a first CQI information determining section.

Herein, the reason why the first CQI information determining section is not present in Embodiment 7 is that the CQI is generally a value indicative of amplitude, power, signal to noise ratio or the like, and it is not necessary to transform using the bitmap.

In FIG. 21, the second CQI information determining section 1003 determines a compression rate from a control signal input from the control section 1041. Accordingly, when the first CQI information is input once, the section 1003 may operate a plurality of times. Further, with the operations, the IDCT section 1004 and the third CQI information determining section 1005 operate a plurality of times. The operations of a plurality of times can be substituted by using a plurality of CQI information determining apparatuses having the same functions to finally compare, but in consideration of increases in circuit scale, this Embodiment shows the case that a single CQI information determining apparatus operates a plurality of times to determine a compression rate.

The control section 1041 receives the first CQI information and the third CQI information. The control section 1041 first outputs an arbitrary compression rate determined in the system as control information 1. Then, the section 1041 compares the calculated third CQI information with previously input first CQI information, and when the number of errors is within the predetermined number, suspends the operation. When the number of errors exceeds the predetermined number, the section 1041 varies the compression rate, and operates the second CQI information determining section 1003 again. By such repetition, the compression rate is selected so that the number of errors is the predetermined number.

Described next is the operation that the CQI information determining apparatus performs according to control of the control section 1041. To simplify the descriptions, it is assumed that the compression rates are four, 1/8, 1/4, 1/2 and 1, and that the predetermined number of errors is X (X is any integer of "0" or more and determined by the system). It is further assumed that the compression rate of 1/8 is selected in the first operation to minimize the compression rate.

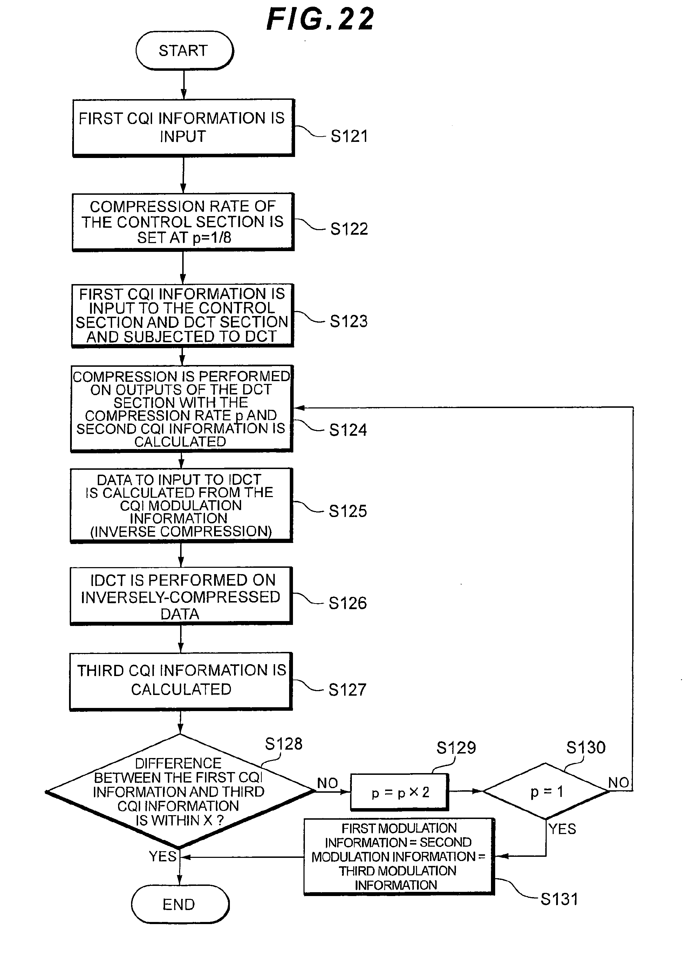

FIG. 22 is a flowchart illustrating the operation of the CQI information determining apparatus according to Embodiment 7. First, the apparatus receives the first CQI information such as an amplitude value of each subcarrier, SINR or the like (step S121). Next, the apparatus sets the compression rate p at an initial value, herein 1/8 (step S122). Then, the first CQI information is input to the DCT section 1002 to undergo DCT, while being input to the control section 1041 (step S123), and outputs of DCT are compressed with the compression rate p to calculate the second CQI information (step S124).

Next, the second CQI information calculated in step S124 is subjected to inverse compression (step S125), and IDCT is performed on the inversely-compressed data (step S126). Based on the result of IDCT, the third CQI information is calculated (step S127), and compared with the first CQI information, and it is determined whether the error is within the predetermine value i.e. within X (step S128). As a result of the comparison, when the error between the first CQI information and the third CQI information is not within X, the compression rate p is doubled (step S129), and it is determined whether p is "1" (step S130) as a result. When p is not "1", the processing flow proceeds to step S124. When p is "1", it is meant that compression cannot be performed, the first to third CQI information is assumed to be the same as one another (step S131), and the processing is finished. Meanwhile, in step S128, when the error between the first CQI information and the third CQI information is within X, the processing is finished.

This flowchart adopts the form that the compression rate is doubled to vary, but the invention is not limited thereto, and only requires the constitution of trying all the set compression rates. Further, the lowest compression rate is set as an initial value, but the invention is not limited thereto, and by setting a value used in last communication, value estimated from delay dispersion or the like, it is possible to reduce the number of calculations. Furthermore, the scheme of not compressing is adopted, but is not always necessary, and any problem does not occur in a constitution where the flow is finished by a predetermined compression rate.

As an error between the first CQI information and the third CQI information, it is possible to support by a method of counting the number of different values, or another method of adding the absolute value of the error.

Thus, it is possible to efficiently compress the CQI information in almost the same constitution as in MLI compression. In addition, the second CQI information is notified to a communicating destination, and the notifying means and method are not limited particularly. Further, a terminal notified of the second information performs steps from inverse compression shown herein, and thereby, is able to calculate the CQI for each subcarrier of the terminal notifying of the second information.

Further, in the cases of Embodiments 3 to 5 and 7, it is possible to use a plurality of compression methods. For example, in Embodiments 4 and 7, applying the compression method using the difference in the region with a high compression rate is an example. Furthermore, all the Embodiments describe adaptive modulation on a subcarrier basis, but it is possible to use compression for transforming the data space after grouping.

**Claims**

1. A communication scheme determining apparatus applied to an OFDM adaptive modulation system for adaptively determining modulation information for each subcarrier or each subcarrier group with grouped subcarriers based on first propagation path information, and notifying a communicating destination of the determined modulation information, comprising:

   a first modulation information determining section (1) that determines first modulation information for each subcarrier or each subcarrier group with grouped subcarriers, based on the first propagation path information and bitmap information determined from modulation information;

a data transform section (2) that transforms the first modulation information into a different data space;

a second modulation information determining section (3) that compresses the transformed data to determine second modulation information to be notified to a communicating destination;

an inverse data transform section (4) that inversely transforms the second modulation information into an original data space; and

a third modulation information determining section (5) that determines third modulation information for each subcarrier or each subcarrier group with grouped subcarriers, based on the inversely-transformed data and the bitmap information.

2. A communication scheme determining apparatus applied to an OFDM adaptive modulation system for adaptively determining modulation information for each subcarrier or each subcarrier group with grouped subcarriers based on first propagation path information, and notifying a communicating destination of the determined modulation information, comprising:

a first modulation information determining section (1) that determines first modulation information for each subcarrier or each subcarrier group with grouped subcarriers, based on the first propagation path information and bitmap information determined from modulation information;

a data transform section (2) that transforms the first modulation information into a different data space;

a second modulation information determining section (33) that performs compression corresponding to second propagation path information on the transformed data to determine second modulation information to be notified to a communicating destination;

an inverse data transform section (4) that inversely transforms the second modulation information into an original data space; and

a third modulation information determining section (5) that determines third modulation information for each subcarrier or each subcarrier group with grouped subcarriers, based on the inversely-transformed data and the bitmap information.

3. The communication scheme determining apparatus according to claim 2, wherein the second propagation path information is delay dispersion of a propagation path, and the second modulation information determining section performs compression corresponding to the delay dispersion.

4. A communication scheme determining apparatus applied to an OFDM adaptive modulation system for adaptively determining modulation information for each subcarrier or each subcarrier group with grouped subcarriers based on first propagation path information, and notifying a communicating destination of the determined modulation information, comprising:

a first modulation information determining section (1) that determines first modulation information for each subcarrier or each subcarrier group with grouped subcarriers, based on the first propagation path information and bitmap information determined from modulation information;

a data transform section (2) that transforms the first modulation information into a different data space;

a second modulation information determining section (34) that compresses the transformed data to determine second modulation information to be notified to a communicating destination;

an inverse data transform section (4) that inversely transforms the second modulation information into an original data space;

a third modulation information determining section (5) that determines third modulation information for each subcarrier or each subcarrier group with grouped subcarriers, based on the inversely-transformed data and the bitmap information; and

a control section (41) that detects a difference between the first modulation information and the third modulation information,

wherein the second modulation information determining section compresses the transformed data so that the difference between the first modulation information and the third modulation information input from the control section is a predetermined threshold or less.

5. A communication scheme determining apparatus applied to an OFDM adaptive modulation system for adaptively determining modulation information for each subcarrier or each subcarrier group with grouped subcarriers based on first propagation path information, and notifying a communicating destination of the determined modulation information, comprising:

a first modulation information determining section (1) that determines first modulation information for each subcarrier or each subcarrier group with grouped subcarriers, based on the first propagation path information and bitmap information determined from modulation information;

a data transform section (2) that transforms the first modulation information into a different data space;

a second modulation information determining section (34) that compresses the transformed data to determine second modulation information to be notified to a communicating destination;

an inverse data transform section (4) that inversely transforms the second modulation information into an original data space;

a third modulation information determining section (5) that determines third modulation information for each subcarrier or each subcarrier group with grouped subcarriers, based on the inversely-transformed data and the bitmap information; and

a control section (41) that detects a difference between the first modulation information and the third modulation information,

wherein the second modulation information determining section selects a compression method that minimizes the difference between the first modulation information and the third modulation information input from the control section from among a plurality of kinds of compression methods, and compresses the transformed data by the selected compression method.

6. The communication scheme determining apparatus according to claim 1, wherein the bitmap information is represented by the number of information bits indicating at least one of a modulation scheme and a coding rate, and the modulation information is mapped sequentially corresponding to the number of information bits.

7. A communication scheme determining apparatus applied to an OFDM adaptive modulation system for notifying a communicating destination of CQI information indicative of reception quality for each subcarrier or each subcarrier group with grouped subcarriers, comprising:

a data transform section (1002) that transforms first CQI information into a different data space; and

a second CQI information determining section (1003) that performs compression corresponding to second propagation path information on the transformed data to determine second CQI information to be notified to a communicating destination.

8. The communication scheme determining apparatus according to claim 7, wherein the second propagation path information is delay dispersion of a propagation path, and the second CQI information determining section (1003) performs compression corresponding to the delay dispersion.

9. A communication scheme determining apparatus applied to an OFDM adaptive modulation system for notifying a communicating destination of CQI information indicative of reception quality for each subcarrier or each subcarrier group with grouped subcarriers, comprising:

a data transform section (1002) that transforms first CQI information into a different data space;

a second CQI information determining section (1003) that compresses the transformed data to determine second CQI information to be notified to a communicating destination;

an inverse data transform section (1004) that inversely transforms the second CQI information into an original data space;

a third CQI information determining section (1005) that determines third CQI information for each subcarrier or each subcarrier group with grouped subcarriers based on the inversely-transformed data; and

a control section (1041) that detects a difference between the first CQI information and the third CQI information, wherein the second CQI information determining section compresses the transformed data so that the difference between the first CQI information and the third CQI information input from the control section is a predetermined threshold or less.

10. A communication scheme determining apparatus applied to an OFDM adaptive modulation system for notifying a communicating destination of CQI information indicative of reception quality for each subcarrier or each subcarrier group with grouped subcarriers, comprising:

a data transform section (1002) that transforms first CQI information into a different data space;

a second CQI information determining section (1003) that compresses the transformed data to determine second CQI information to be notified to a communicating destination;

an inverse data transform section (1004) that inversely transforms the second CQI information into an original data space;

a third CQI information determining section (1005) that determines third CQI information for each subcarrier or each subcarrier group with grouped subcarriers based on the inversely-transformed data; and

a control section (1041) that detects a difference between the first CQI information and the third CQI information, wherein the second CQI information determining section selects a compression method that minimizes the difference between the first CQI information and the third CQI information input from the control section from among a plurality of kinds of compression methods, and compresses the transformed data by the selected compression method.

11. The communication scheme determining apparatus according to claim 1, wherein the data transform is discrete cosine transform, and the inverse data transform is inverse discrete cosine transform.

12. The communication scheme determining apparatus according to claim 11, wherein the compression is to allocate different information amounts for each output sample or sample group of discrete cosine transform.

13. The communication scheme determining apparatus according to claim 11, wherein the compression is performed by reducing information amounts corresponding to frequencies more than or equal to a predetermined frequency for an output signal subjected to the discrete cosine transform.

14. The communication scheme determining apparatus according to claim 11, wherein the compression is performed by setting information amounts corresponding to frequencies more than or equal to a predetermined frequency at zero for an output signal subjected to the discrete cosine transform.

15. The communication scheme determining apparatus according to claim 5, wherein the data transform section (2) performs discrete cosine transform on the first modulation information, and

the second modulation information determining section (34) selects a compression method that minimizes the difference between the first modulation information and the third modulation information input from the control section (41) based on a table for allocating different information amounts corresponding to compression methods, for a plurality of sample groups obtained by grouping a plurality of samples obtained by performing the discrete cosine transform, and compresses the transformed data by the selected compression method.

16. The communication scheme determining apparatus according to claim 10, wherein the data transform section (1002) performs discrete cosine transform on the first CQI information, and

the second CQI information determining section (1003) selects a compression method that minimizes the difference between the first CQI information and the third CQI information input from the control section (1041) based on a table for allocating different information amounts corresponding to compression methods, for a plurality of sample groups obtained by grouping a plurality of samples obtained by performing the discrete cosine transform, and compresses the transformed data by the selected compression method.

17. A transmission apparatus applied to an OFDM adaptive modulation system for adaptively determining modulation information for each subcarrier or each subcarrier group with grouped subcarriers based on first propagation path information, and notifying a communicating destination of the determined modulation information, comprising:

the communication scheme determining apparatus according to claim 1;

a subcarrier adaptive modulation section (22) that modulates subcarriers based on the third modulation information output from the communication scheme determining apparatus; and

a transmission section (26) that transmits the second modulation information output from the communication scheme determining apparatus to a communicating destination.

18. A transmission apparatus applied to an OFDM adaptive modulation system for adaptively determining modulation information for each subcarrier or each subcarrier group with grouped subcarriers based on first propagation path information, and notifying a communicating destination of the determined modulation information, comprising:

the communication scheme determining apparatus according to claim 2,

a subcarrier adaptive modulation section (22) that modulates subcarriers based on the third modulation information output from the communication scheme determining apparatus; and

a transmission section (26) that transmits the second modulation information output from the communication scheme determining apparatus and compression information to generate the second modulation information to a communicating destination.

**19.** A transmission apparatus applied to an OFDM adaptive modulation system for notifying a communicating destination of CQI information indicative of reception quality, comprising:

the communication scheme determining apparatus according to claim 7; and

a transmission section (26) that transmits the second CQI information output from the communication scheme determining apparatus and compression information to generate the second CQI information to a communicating destination.

**20.** A reception apparatus for receiving an OFDM signal transmitted from the transmission apparatus according to claim 17 to demodulate data, comprising:

an inverse transform section (64) that has a same function as the function of the inverse data transform section to inversely transform the received second modulation information into an original data space.

**21.** A reception apparatus for receiving an OFDM signal transmitted from the transmission apparatus according to claim 18 to demodulate data, comprising:

an inverse transform section (64) that has a same function as the function of the inverse data transform section to inversely transform the received second modulation information into an original data space from compression information to generate the second modulation information.

**22.** A reception apparatus for receiving an OFDM signal transmitted from the transmission apparatus according to claim 19 to demodulate data, comprising:

an inverse transform section (64) that has a same function as the function of the inverse data transform section to inversely transform the received second CQI information into an original data space from compression information to generate the second CQI information.

**23.** A communication scheme determining method applied to an OFDM adaptive modulation system for adaptively determining modulation information for each subcarrier or each subcarrier group with grouped subcarriers based on first propagation path information, and notifying a communicating destination of the determined modulation information, at least including:

determining first modulation information for each subcarrier or each subcarrier group with grouped subcarriers, based on the first propagation path information and bitmap information determined from modulation information; transforming the first modulation information into a different data space; compressing the transformed data to determine second modulation information to be notified to a communicating destination; inversely transforming the second modulation information into an original data space; and determining third modulation information for each subcarrier or each subcarrier group with grouped subcarriers, based on the inversely-transformed data and the bitmap information.

**24.** A communication scheme determining method applied to an OFDM adaptive modulation system for notifying a communicating destination of CQI information indicative of reception quality for each subcarrier or each subcarrier group with grouped subcarriers, at least including:

transforming first CQI information into a different data space; compressing the transformed data to determine second CQI information to be notified to a communicating destination; inversely transforming the second CQI information into an original data space; determining third CQI information for each subcarrier or each subcarrier group with grouped subcarriers based on the inversely-transformed data; and detecting a difference between the first CQI information and the third CQI information,

wherein in the step of determining the second CQI information, the transformed data is compressed so that the difference between the first CQI information and the third CQI information is a predetermined threshold or less.

25. A communication scheme determining method applied to an OFDM adaptive modulation system for notifying a communicating destination of CQI information indicative of reception quality for each subcarrier or each subcarrier group with grouped subcarriers, at least including:

transforming first CQI information into a different data space;
compressing the transformed data to determine second CQI information to be notified to a communicating destination;
inversely transforming the second CQI information into an original data space;
determining third CQI information for each subcarrier or each subcarrier group with grouped subcarriers based on the inversely-transformed data; and
detecting a difference between the first CQI information and the third CQI information,
wherein in the step of determining the second CQI information, a compression method that minimizes the difference between the first CQI information and the third CQI information is selected from among a plurality of kinds of compression methods, and the transformed data is compressed by the selected compression method.

**FIG.1**

EP 2 139 136 A1

# FIG.2

START

↓

**S1** — FIRST MODULATION INFORMATION IS CALCULATED BASED ON SINR, TARGET BER, AND BITMAP

↓

**S2** — DCT IS PERFORMED ON THE FIRST MODULATION INFORMATION

↓

**S3** — COMPRESSION IS PERFORMED ON OUTPUTS OF DCT AND THE SECOND MODULATION INFORMATION IS CALCULATED

↓

**S4** — DATA TO INPUT TO IDCT IS CALCULATED FROM THE SECOND MODULATION INFORMATION

↓

**S5** — IDCT IS PERFORMED

↓

**S6** — THIRD MODULATION INFORMATION IS CALCULATED BASED ON BITMAP

↓

END

# FIG.3

PROPAGATION
PATH ESTIMATION SIGNAL

TRANSMISSION
DATA →

CONTROL DATA →

21 — FIRST SELECTING SECTION

22 — MODU-LATION SECTION

23 — SECOND SELECTING SECTION

24 — IFFT SECTION

25 — GI INSERTING SECTION

26 — RF SECTION

SECOND
MODULATION
INFORMATION

THIRD
MODULATION
INFORMATION

COMMUNICATION
CONDITIONS SINR →

COMMUNICATION SCHEME DETERMINING APPARATUS — 10

TARGET
BER(PER) →

EP 2 139 136 A1

EP 2 139 136 A1

# FIG.4

| PROPAGATION PATH ESTIMATION SIGNAL | CONTROL SIGNAL | | ~TRANSMISSION DATA~ | |
|---|---|---|---|---|

# FIG.5

```
        ( START )
            │                    S11
            ▼
    ┌───────────────────┐
    │   ACQUISITION OF   │
    │  SINR AND SETTING OF│
    │    TARGET BER      │
    └───────────────────┘          S12
            │
            ▼
    ┌───────────────────┐
    │   COMMUNICATION    │
    │ SCHEME DETERMINING │
    │     OPERATION      │
    └───────────────────┘          S13
            │
            ▼
    ┌───────────────────┐
    │   TRANSMISSION OF  │
    │  PROPAGATION PATH  │
    │    ESTIMATION      │
    └───────────────────┘          S14
            │
            ▼
    ┌───────────────────┐
    │    TRANSMISSION    │
    │   OF CONTROL DATA  │
    └───────────────────┘          S15
            │
            ▼
    ┌───────────────────┐
    │ TRANSMISSION DATA IS│
    │  MODULATED WITH THIRD│
    │ MODULATION INFORMATION│
    │   AND TRANSMITTED  │
    └───────────────────┘
            │
            ▼
        ( END )
```

# FIG.6

EP 2 139 136 A1

# FIG.7

# FIG.8

EP 2 139 136 A1

# FIG.9

| PROPAGATION PATH ESTIMATION SIGNAL | CONTROL SIGNAL | | ~TRANSMISSION DATA~ | |

| COMPRESSION INFORMATION | SECOND MODULATION INFORMATION | OTHERS |

EP 2 139 136 A1

## *FIG.10*

DISTRIBUTION OF THE NUMBER OF ERRORS

EP 2 139 136 A1

# FIG.11

**FIG.12**

START

FIRST MODULATION INFORMATION IS CALCULATED BASED ON SINR, TARGET BER AND BITMAP — S21

COMPRESSION RATE OF THE CONTROL SECTION IS SET AT p=1/8 — S22

MODULATION INFORMATION 1 IS INPUT TO THE CONTROL SECTION AND DCT SECTION AND SUBJECTED TO DCT — S23

COMPRESSION IS PERFORMED ON OUTPUTS OF THE DCT SECTION WITH THE COMPRESSION RATE p AND MODULATION INFORMATION 2 IS CALCULATED — S24

DATA TO INPUT TO IDCT IS CALCULATED FROM SECOND MODULATION INFORMATION (INVERSE COMPRESSION) — S25

IDCT IS PERFORMED ON INVERSELY-COMPRESSED DATA — S26

MODULATION INFORMATION 3 IS CALCULATED — S27

S28 — DIFFERENCE BETWEEN MODULATION INFORMATION 1 AND MODULATION INFORMATION 3 IS WITHIN X ?

NO → S29 — $p = p \times 2$ → S30 — p=1 → NO

S30 YES

YES

END

FIRST MODULATION INFORMATION = SECOND MODULATION INFORMATION = THIRD MODULATION INFORMATION — S31

# FIG.13

PROPAGATION
PATH ESTIMATION SIGNAL

TRANSMISSION
DATA → | 21 FIRST SELECTING SECTION | → | 22 MODU-LATION SECTION | → | 23 SECOND SELECTING SECTION | → | 24 IFFT SECTION | → | 25 GI INSERTING SECTION | → | 26 RF SECTION |

SECOND
MODULATION
INFORMATION

THIRD
MODULATION
INFORMATION

COMMUNICATION
CONDITIONS SINR →

| COMMUNICATION SCHEME DETERMINING APPARATUS | 12

TARGET
BER(PER) →

EP 2 139 136 A1

# FIG.14

## FIG.15

START

FIRST MODULATION INFORMATION IS CALCULATED BASED ON SINR, TARGET BER, AND BITMAP  — S40

EACH SCHEME IS REPRESENTED BY THE FOLLOWING NUMERIC VALUE.

D-1/2A=1
D-1/2B=2
D-1/2C=3
D-1/2D=4

SET A COMPRESSION METHOD OF THE CONTROL SECTION FOR M_C=1, ERROR=100 EACH SCHEME IS REPRESENTED BY THE FOLLOWING NUMERIC VALUE.  — S41

MODULATION INFORMATION 2 IS INVERSELY COMPRESSED  — S42

COMPRESSION IS PERFORMED ON OUTPUTS OF THE DCT SECTION WITH THE DESIGNATED COMPRESSION RATE AND MODULATION INFORMATION 2 IS CALCULATED VALUE.  — S43

ICDT IS PERFORMED ON COMPRESSED DATA  — S44

MODULATION INFORMATION 3 IS CALCULATED  — S45

|MODULATION INFORMATION 1- MODULATION INFORMATION 3|  — S46

N_ERROR < ERROR  — S47  NO

YES  S48

MODULATION INFORMATION 2, 3 IS HELD

N_ERROR=0?  — S49  NO

YES

M_C = M_C+1  — S51

NO

M_C =4?  — S50

YES

END

# FIG.16

# FIG.17

## FIG.18

PROPAGATION PATH ESTIMATION VALUE → **62** DEMODULATION SECTION

CONTROL DATA →

→ **63** DATA SELECTING SECTION

→ SECOND MODULATION INFORMATION → **64** IDCT SECTION

→ **65** FOURTH MODULATION INFORMATION DETERMINING SECTION → THIRD MODULATION INFORMATION

↑ BITMAP

EP 2 139 136 A1

# FIG.19

```
        ┌─────────────┐
        │    START    │
        └──────┬──────┘
               │
               ▼
   ┌───────────────────────┐
   │  SECOND MODULATION    │
   │ INFORMATION IS SELECTED│──── S61
   │     AND ACQUIRED      │
   └───────────┬───────────┘
               │
               ▼
   ┌───────────────────────┐
   │  SECOND MODULATION    │
   │ INFORMATION IS INVERSELY│──── S62
   │      COMPRESSED       │
   └───────────┬───────────┘
               │
               ▼
   ┌───────────────────────┐
   │ IDCT IS PERFORMED ON THE│
   │  INVERSELY-COMPRESSED  │──── S63
   │         DATA          │
   └───────────┬───────────┘
               │
               ▼
   ┌───────────────────────┐
   │   THIRD MODULATION    │
   │ INFORMATION IS CALCULATED│──── S64
   │    BASED ON BITMAP    │
   └───────────┬───────────┘
               │
               ▼
        ┌─────────────┐
        │     END     │
        └─────────────┘
```

# FIG.20

```
           ┌──────────┐
           │  START   │
           └────┬─────┘
                │
                ▼
    ┌───────────────────────┐
    │   OFDM RECEPTION       │  ⟋ S71
    │     PROCESSING         │
    └───────────┬───────────┘
                │
                ▼
    ┌───────────────────────┐
    │  PROPAGATION PATH      │  ⟋ S72
    │     ESTIMATION         │
    └───────────┬───────────┘
                │
                ▼
    ┌───────────────────────┐
    │ CONTROL DATA DEMODULATION │
    │  (SECOND MODULATION    │  ⟋ S73
    │     INFORMATION)       │
    └───────────┬───────────┘
                │
                ▼
    ┌───────────────────────┐
    │   THIRD MODULATION     │  ⟋ S74
    │ INFORMATION CALCULATION│
    └───────────┬───────────┘
                │
                ▼
    ┌───────────────────────┐
    │   DATA DEMODULATION    │  ⟋ S75
    └───────────┬───────────┘
                │
                ▼
           ┌──────────┐
           │   END    │
           └──────────┘
```

# FIG.21

# FIG.22

START

FIRST CQI INFORMATION IS INPUT — S121

COMPRESSION RATE OF THE CONTROL SECTION IS SET AT p=1/8 — S122

FIRST CQI INFORMATION IS INPUT TO THE CONTROL SECTION AND DCT SECTION AND SUBJECTED TO DCT — S123

COMPRESSION IS PERFORMED ON OUTPUTS OF THE DCT SECTION WITH THE COMPRESSION RATE p AND SECOND CQI INFORMATION IS CALCULATED — S124

DATA TO INPUT TO IDCT IS CALCULATED FROM THE CQI MODULATION INFORMATION (INVERSE COMPRESSION) — S125

IDCT IS PERFORMED ON INVERSELY-COMPRESSED DATA — S126

THIRD CQI INFORMATION IS CALCULATED — S127

S128 — DIFFERENCE BETWEEN THE FIRST CQI INFORMATION AND THIRD CQI INFORMATION IS WITHIN X ?

NO → S129 $p = p \times 2$ → S130 $p = 1$

S130 NO →

$p = 1$ YES →

S131 — FIRST MODULATION INFORMATION = SECOND MODULATION INFORMATION = THIRD MODULATION INFORMATION

YES → END

<div align="center">**INTERNATIONAL SEARCH REPORT**</div>

| | International application No. |
|---|---|
| | PCT/JP2008/056694 |

A.  CLASSIFICATION OF SUBJECT MATTER
*H04J11/00*(2006.01)i, *H04Q7/38*(2006.01)i

According to International Patent Classification (IPC) or to both national classification and IPC

B.  FIELDS SEARCHED

Minimum documentation searched (classification system followed by classification symbols)
H04J11/00, H04Q7/38

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>A | LG Electronics, DCT based CQI reporting scheme, 3GPP TSG RAN WG1 LTE Ad Hoc R1-061777, 2006.06, pp.1-11 | 7-8,19-22<br>1-6,9-18,<br>23-25 |
| E,X<br>E,A | WO 2008/047646 A1 (Sharp Corp.), 24 April, 2008 (24.04.08), Par. Nos. [0082] to [0106]; Figs. 11, 12 (Family: none) | 7-8,19,22<br>1-6,9-18,<br>20-21,23-25 |
| A | Huawei, Sensitivity of DL/UL Performance to CQI-Compression with Text Proposal, 3GPP TSG RAN WG1 ad hoc meeting on LTE R1-060228, 2006.01, pp.1-7 | 1-25 |
| A | Ericsson, E-UTRA Incremental CQI Reporting Using DCT Coding, 3GPP TSG-RAN WG1 #46 R1-062278, 2006.09, pp.1-7 | 1-25 |

☒  Further documents are listed in the continuation of Box C.      ☐   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 June, 2008 (26.06.08) | 08 July, 2008 (08.07.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

<div align="center">52</div>

**INTERNATIONAL SEARCH REPORT**

International application No.

PCT/JP2008/056694

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2004-128661 A   (Matsushita Electric Industrial Co., Ltd.), 22 April, 2004 (22.04.04), Par. Nos. [0107] to [0108] (Family: none) | 1-25 |
| A | JP 2003-169036 A   (Japan Telecom Co., Ltd.), 13 June, 2003 (13.06.03), Full text; all drawings & JP 3875086 B2 | 1-25 |
| A | WO 2006/080180 A1   (Sharp Corp.), 03 August, 2006 (03.08.06), Full text; all drawings & EP 1850516 A1 | 1-25 |
| A | Ahn, C.-J. et al., Differential modulated pilot symbol assisted adaptive OFDM for reducing the MLI, TENCON 2004. 2004 IEEE Region 10 Conference, vol.2, 2004.11, pp.577-580 | 1-25 |
| A | JP 2001-238269 A   (KDDI Corp.), 31 August, 2001 (31.08.01), Full text; all drawings & US 2001/0024427 A1     & US 6836484 B2 & JP 3826653 B2 | 1-25 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A study on Block Controlled Multilevel Transmit Power Control Scheme using Carrier hole Control Technique for OFDM based Adaptive Modulation System. *IEICE, Technical Report, RCS2003-279*